# EUROPÄISCHE PATENTSCHRIFT

(11) **EP 2 735 756 B1**
(45) Veröffentlichungstag und Bekanntmachung des Hinweises auf die Patenterteilung: **05.04.2017**
(21) Anmeldenummer: 13192210.6
(22) Anmeldetag: 08.11.2013
(51) Int. Cl.: F16F 7/12, B60R 19/34

(54) **Adaptive Energieabsorptionseinheit und Verfahren zum Absorbieren einer Aufprallenergie eines Objektes auf ein Fahrzeug**
Adaptive energy absorption unit and method for absorbing impact energy of an object on a vehicle
Unité d'absorption d'énergie adaptative et procédé d'absorption d'une énergie de choc d'un objet sur un véhicule

(30) Priorität: 23.11.2012 DE 102012221414
(43) Veröffentlichungstag der Anmeldung: 28.05.2014
(73) Patentinhaber: ROBERT BOSCH GMBH, 70442 Stuttgart (DE)
(72) Erfinder: Freienstein, Heiko, 71263 Weil Der Stadt (DE); Friedrich, Thomas, 71691 Freiberg A. N. (DE); Holz, Dieter, 71563 Affalterbach (DE); Katzschmann, Martin, 04703 Bockelwitz (DE); Loosen, Stephan, 74395 Mundelsheim (DE); Wolkenstein, Maja, 74343 Sachsenheim (DE); Derhardt, Steffen, 70839 Gerlingen (DE)

(56) Entgegenhaltungen:
- EP-A1- 2 022 682
- EP-A2- 1 486 381
- WO-A1-2009/063275
- DE-A1-102011 111 712
- US-A- 5 460 421

## Beschreibung

### Stand der Technik

Die vorliegende Erfindung bezieht sich auf eine adaptive Energieabsorptionseinheit zum Absorbieren einer Aufprallenergie eines Objektes auf ein Fahrzeug, auf ein entsprechendes Verfahren, ein entsprechendes Steuergerät sowie auf ein entsprechendes Computerprogrammprodukt. In modernen Fahrzeugen werden zunehmend Komponenten zum verbesserten Schutz von Fahrzeuginsassen und Personen außerhalb des Fahrzeugs wie beispielsweise Fußgängern bei einem Aufprall eines Objektes auf das Fahrzeug eingesetzt. Ein Beispiel für eine solche Komponente ist ein in der Schrift EP 1 792 786 A2 beschrieben.

Die Druckschrift WO2009/063275 A1 offenbart eine adaptive Energieabsorptionseinheit zum Absorbieren einer Aufprallenergie eines Objektes auf ein Fahrzeug, wobei die Energieabsorptionseinheit ein erstes Absorberelement, welches ausgebildet ist um bei Absorption von einer in eine Wirkrichtung wirkenden Aufprallenergie einer ersten Aufprallenergiemenge zumindest teilweise verformt zu werden und ein zweites Absorberelement das ausgebildet ist um bei Absorption von einer in die Wirkrichtung wirkenden Aufprallenergie einer von der ersten Aufprallenergiemenge unterschiedlichen zweiten Aufprallenergiemenge zumindest teilweise verformt zu werden, wobei das erste und zweite Absorberelement bezogen auf die Wirkrichtung hintereinander angeordnet sind, und eine Aktoreinheit die ausgebildet ist, um ansprechend auf ein Aktorsignal eine Relativbewegung des ersten Absorberelementes in Bezug zum zweiten Absorberelement freizugeben oder zu sperren.

Die Druckschrift EP 2 022 682 A1 eine Struktur eines Chassis eines automobilen Fahrzeugs und ein Fahrzeug, welches eine solche Struktur aufweist.

Die Druckschrift US 5,460,421 A1 offenbart ein eine aktive Aufprallstütze.

Die Druckschrift EP 1 486 381 A2 offenbart einen Kraftfahrzeugstossfänger.

### Offenbarung der Erfindung

Vor diesem Hintergrund wird mit der vorliegenden Erfindung eine adaptive Energieabsorptionseinheit zum Absorbieren einer Aufprallenergie eines Objektes auf ein Fahrzeug, ein entsprechendes Verfahren und ein Steuergerät, das dieses Verfahren verwendet sowie schließlich ein entsprechendes Computerprogrammprodukt gemäß den Hauptansprüchen vorgestellt. Vorteilhafte Ausgestaltungen ergeben sich aus den jeweiligen Unteransprüchen und der nachfolgenden Beschreibung.

Gemäß dem hier vorgestellten Ansatz wird eine adaptive Energieabsorptionseinheit zum Absorbieren einer Aufprallenergie eines Objektes auf ein Fahrzeug vorgestellt, wobei die Energieabsorptionseinheit zumindest die folgenden Merkmale aufweist:
- ein erstes Absorberelement, welches ausgebildet ist, um bei Absorption von einer in eine Wirkrichtung wirkenden Aufprallenergie einer ersten Aufprallenergiemenge zumindest teilweise verformt zu werden;
- ein zweites Absorberelement, das ausgebildet ist, um bei Absorption von einer in die Wirkrichtung wirkenden Aufprallenergie einer von der ersten Aufprallenergiemenge unterschiedlichen zweiten Aufprallenergiemenge zumindest teilweise verformt zu werden; wobei das erste und zweite Absorberelement bezogen auf die Wirkrichtung hintereinander angeordnet sind; und
- eine Aktoreinheit, die ausgebildet ist, um ansprechend auf ein Aktorsignal eine Relativbewegung des ersten Absorberelementes in Bezug zum zweiten Absorberelement freizugeben oder zu sperren.

Ferner schafft der hier vorgestellte Ansatz ein Verfahren zum Absorbieren einer Aufprallenergie eines Objektes auf ein Fahrzeug, wobei das Verfahren unter Verwendung einer adaptiven Energieabsorptionseinheit entsprechend einer der hier vorgestellten Variante, wobei das Verfahren zumindest die folgenden Schritte aufweist:
- Einlesen des Sensorsignals, das eine Aufprallenergie eines Objektes auf ein Fahrzeug repräsentiert; und
- Ausgeben eines unter Verwendung des Sensorsignals ermittelten Aktorsignals an eine Aktoreinheit, um eine Relativbewegung des ersten Absorberelements in Bezug zum zweiten Absorberelement freizugeben oder zu sperren.

Auch wird hier ein Steuergerät vorgestellt, das ausgebildet ist, um die Schritte einer Variante des hier vorgestellten Verfahrens in entsprechenden Einrichtungen durchzuführen, anzusteuern bzw. umzusetzen. Auch durch diese Ausführungsvariante der Erfindung in Form eines Steuergeräts kann die der Erfindung zugrunde liegende Aufgabe schnell und effizient gelöst werden.

Unter einem Steuergerät kann vorliegend ein elektrisches Gerät verstanden werden, das Sensorsignale verarbeitet und in Abhängigkeit davon Steuer- und/oder Datensignale ausgibt. Das Steuergerät kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen des Steuergeräts beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Von Vorteil ist auch ein Computerprogrammprodukt mit Programmcode, der auf einem maschinenlesbaren Träger wie einem Halbleiterspeicher, einem Festplattenspeicher oder einem optischen Speicher gespeichert sein kann und zur Durchführung des Verfahrens nach einer der vorstehend beschriebenen Ausführungsformen verwendet wird, wenn das Programmprodukt auf einem Computer oder einer Vorrichtung ausgeführt wird.

Unter einem Absorberelement kann beispielsweise ein mechanisches Bauelement verstanden werden, welches ein Rohr oder ein allgemeines, sich in eine Hauptlängserstreckungsrichtung erstreckendes Bauteil oder Profilelement umfasst, das bei einer Absorption von Aufprallenergie verformt werden kann. Ein solches Verformen kann beispielsweise durch ein Falten, ein Zersplittern, ein Zerbröseln oder der gleichen umfassen, sodass sich die Form des Absorberelementes nach dem Verformen von einer Form des Absorberrohrs vor dem Verformen unterscheidet. Ein Absorberelement kann auch zwei unterschiedliche Teilelemente aufweisen, die je eine unterschiedliche Steifigkeit (d. h. Energieabsorptionsfähigkeit) aufweisen. Beispielsweise kann ein erstes Teilelement eines solchen Absorberelements eine hohe Steifigkeit aufweisen, während ein anderes Teilelement (d. h. Teilbereich) eine niedrige Steifigkeit aufweist.

Unter einem Objekt kann beispielsweise ein Fußgänger, ein Baum, ein anderes Fahrzeug oder der gleichen verstanden werden, welches bei einem Aufprall des Objektes durch eine Aufprallenergie oder einem Aufprallimpuls eine Gefährdung für Insassen des Fahrzeugs darstellt. Bei dem Aufprall kann auch eine Gefährdung für das Objekt selbst bestehen, beispielsweise wenn es sich bei dem Objekt um einen Fußgänger handelt.

Die beiden Absorberelemente sind beispielsweise derart ausgewählt, dass sie sich bei vorbestimmten (unterschiedlichen) Aufprallenergiemengen bzw. -stärken verformen. Beispielsweise kann sich das erste Absorberelement bereits bei einer geringeren Aufprallenergiemenge verformen, als das zweite Absorberelement. Alternativ ist es auch denkbar, dass sich das erste Absorberelement erst bei einer größeren Aufprallenergiemenge verformt, als das zweite Absorberelement. Die beiden für die Energieabsorptionseinheit gewählten Absorberelemente weisen beispielsweise unterschiedliche Steifigkeit auf. Unter einer Wirkrichtung kann eine Richtung verstanden werden, in die die Aufprallenergie wirkt. Beispielsweise kann die Wirkrichtung einer Bewegungsrichtung des Objekts und/oder einer Bewegungsrichtung zumindest eines Absorberelementes entsprechen, wenn das Absorberelement Aufprallenergie absorbiert. Unter einer Aktoreinheit kann eine Einheit verstanden werden, die zumindest ein mechanisch bewegliches Element aufweist, welches zumindest zwei Stellungen einnehmen kann. In einer ersten Stellung dieses beweglichen Elements kann eine Relativbewegung zwischen dem ersten und zweiten Absorberelement freigegeben sein und in der zweiten Stellung dieses beweglichen Elements kann eine Relativbewegung zwischen dem ersten und zweiten Absorberelement gesperrt sein. Dabei kann beispielsweise das erste Absorberelement mit einem Längsträger des Fahrzeugs sowohl in der ersten als auch in der zweiten Stellung des beweglichen Elements der Aktoreinheit fixiert sein.

Die vorliegende Erfindung basiert auf der Erkenntnis, dass eine sehr kompakte und zugleich dennoch adaptiv einstellbare Energieabsorptionseinheit dadurch geschaffen werden kann, dass mehrere Absorberelemente miteinander flexibel gekoppelt werden können. Insbesondere durch die Wahl von unterschiedlich steifen und zueinander bewegbaren bzw. ineinander einführbaren Absorberelementen, zusammen mit der Aktoreinheit, die das zumindest eine bewegliche Element aufweist, lässt sich somit eine technisch sehr einfache und kostengünstig herzustellende Energieabsorptionseinheit schaffen. Hierzu ist lediglich die Wahl von zwei unterschiedlich steifen Absorberelementen (d. h. Absorberelementen, die bei unterschiedlichen Aufprallenergien verformt werden) erforderlich, wobei durch die Aktoreinheit die tatsächliche, aktuelle Steifigkeit der adaptiven Energieabsorptionseinheit durch die Freigabe oder Sperrung der Relativbewegung des ersten Absorberelements in Bezug zum zweiten Absorberelement technisch sehr einfach und auch im Falle eines Aufpralls eines Objektes auf das Fahrzeug noch schnell umschaltbar ist. Die vorliegende Erfindung bietet somit den Vorteil, dass eine in Bezug auf eine Sicherheit von Fahrzeuginsassen oder Personen im Umfeld des Fahrzeugs sehr wünschenswerte Schaltung von unterschiedlichen Energieabsorptionsniveaus durch die hier vorgestellte adaptive Energieabsorptionseinheit mit einem technisch sehr einfachen kostengünstigen und Bauraum sparenden Konzept gelöst werden kann.

Gemäß einer besonderen Ausführungsform der vorliegenden Erfindung kann das zweite Absorberelement ausgebildet sein, um durch die Aufprallenergie der zweiten Aufprallenergiemenge verformt zu werden, die von der ersten Aufprallenergiemenge unterschiedlich ist. Insbesondere kann das erste Absorberelement ausgebildet sein, um bei einer Aufprallenergie verformt zu werden, die einer Kraft entspricht, die mindestens um einen Faktor von fünf, speziell mindestens um einen Faktor von zehn bis fünfzig kleiner ist, als die Kraft, die einer Aufprallenergie entspricht, die zur Verformung des zweiten Absorberelements erforderlich ist. Zusätzlich oder alternativ kann sich ein Herstellungsmaterial des ersten Absorberelement zumindest teilweise von einem Herstellungsmaterial des zweiten Absorberelements unterscheiden und/oder das erste Absorberelement ausgebildet sein, sich zumindest teilweise auf eine andere Weise zu verformen, als das zweite Absorberelement. Eine derartige Ausführungsform der vorliegenden Erfindung bietet den Vorteil, dass eine wirksame Staffelung der unterschiedlichen Aufprallenergieabsorptionsfähigkeit der einzelnen Absorberelemente technisch sehr einfach realisiert werden kann. Zugleich können ausreichend unterschiedliche Aufprallabsorptionsenergieniveaus realisiert werden, die einerseits einen entsprechenden Schutz vom Insassen des Fahrzeugs bei bestimmten Aufprallsituationen und andererseits einen entsprechenden Schutz von Personen im Umfeld des Fahrzeugs bei anderen Aufprallsituationen sicherstellen. Insbesondere kann dabei das erste Absorberelement in das zweite Absorberelement gesteckt oder zumindest steckbar sein.

Gemäß einer besonders vorteilhaften Ausführungsform der vorliegenden Erfindung kann das erste und zweite Absorberelement je als Absorberprofil ausgebildet sein, wobei das erste Absorberelement zumindest teilweise in das zweite Absorberelement einführbar oder eingeführt ist. Eine solche Ausführungsform der vorliegenden Erfindung bietet den Vorteil der Schaffung einer sehr kompakten und damit Bauraum sparenden Ausgestaltung einer Energieabsorptionseinheit.

Um eine besonders flexible Einstellung von gewünschten unterschiedlichen Energieabsorptionsniveaus der Energieabsorptionseinheit realisieren zu können, kann gemäß einer weiteren Ausführungsform der vorliegenden Erfindung das erste Absorberelement ein erstes Teilprofil und ein in dem ersten Teilprofil angeordnetes zweites Teilprofil aufweisen, wobei eine für eine Deformation des zweiten Teilprofils eine größere Deformationsenergie erforderlich ist, als für eine Deformation des ersten Teilprofils.

Gemäß einer besonders einfachen Ausführungsform der vorliegenden Erfindung kann das zweite Teilprofil in das zweite Absorberelement eingeführt oder einführbar ist. Dabei kann beispielsweise das erste Teilprofil auf einem Rand des zweiten Absorberelementes aufgestützt sein. Eine solche Ausführungsform der vorliegenden Erfindung bietet den Vorteil einer technisch sehr kompakten Form der Energieabsorptionseinheit.

Eine andere, ebenfalls sehr kompakt ausführbare Bauform einer Energieabsorptionseinheit gemäß einer Ausführungsform der vorliegenden Erfindung kann dadurch geschaffen werden, dass das erste Absorberelement ausgebildet ist, um bei einer niedrigen Aufprallenergie verformt zu werden, wobei das erste Absorberelement in einem Einsatz angeordnet ist und wobei das zweite Absorberelement ausgebildet ist, um bei Absorption einer höheren Aufprallenergie verform zu werden, wobei das zweite Absorberelement in Wirkrichtung vor dem ersten Absorberelement angeordnet ist. Hierbei kann beispielsweise ein bisher nicht genutzter Bauraum im Inneren des Längsträgers eines Fahrzeugs vorteilhaft genutzt werden.

Günstig ist insbesondere eine Ausführungsform der vorliegenden Erfindung, bei der die Aktoreinheit eine Verriegelungseinheit aufweist, die ausgebildet ist, um in einem das erste Absorberelement freigebenden Zustand bei einer Relativbewegung des ersten Absorberelements gegenüber dem zweiten Absorberelement zumindest teilweise zerstört zu werden. Eine derartige Ausführungsform der vorliegenden Erfindung bietet die Möglichkeit, dass die Verriegelungseinheit gewichtsmäßig sehr leicht, kostengünstig und technisch einfach ausgeführt werden kann, sodass eine schnelle Bewegung dieser Verriegelungseinheit im Falle eines Aufpralls des Objekts auf das Fahrzeug ermöglicht wird. Dabei braucht keine Rücksicht auf die Unbeschädigtheit dieser Verriegelungseinheit genommen werden, da nach einem solchen Aufprall die gesamte Energieabsorptionseinheit ausgetauscht wird.

Günstig ist ferner eine Ausführungsform der vorliegenden Erfindung, bei der die Verriegelungseinheit einen Scherstift und/oder einen Rand des ersten Absorberelements zumindest teilweise abstützendes Ringelement aufweist. Eine derartige Ausführungsform der vorliegenden Erfindung bietet den Vorteil einer technisch besonders einfachen Ausführung der Verriegelungseinheit, sodass sich eine solche Energieabsorptionseinheit kostengünstig herstellen lässt. Zugleich bietet eine derartige Ausführungsform der vorliegenden Erfindung dennoch eine zuverlässige und sichere Abstützung des ersten Absorberelements für den Fall, dass die Relativbewegung zwischen dem ersten und dem zweiten Absorberelement gesperrt ist.

Besonders einfach kann ein Wechsel zwischen einem gesperrten Zustand, bei dem keine Relativbewegung zwischen dem ersten und zweiten Absorberelement zugelassen werden soll und einem freigegebenen Zustand, bei der eine Relativbewegung zwischen dem ersten und dem zweiten Absorberelement ermöglicht werden soll, dann ausgeführt werden, wenn gemäß einer Ausführungsform der vorliegenden Erfindung die Verriegelungseinheit und/oder das erste Absorberelement zumindest eine Sollbruchstelle aufweist, an der die Verriegelungseinheit und/oder das erste Absorberelement bei einer Relativbewegung zwischen dem ersten und zweiten Absorberelement zumindest teilweise zerstört oder beschädigt wird. In einer derartigen Ausführungsform der vorliegenden Erfindung kann somit durch einen bereits relativ kleinen Impuls oder eine kleine Energie die Verriegelungseinheit und/oder das erste Absorberelement deformiert oder zerstört werden, um die Relativbewegung zwischen dem ersten und dem zweiten Absorberelement freizugeben.

Günstig ist ferner eine Ausführungsform der vorliegenden Erfindung, bei der die Aktoreinheit eine reversibel betätigbare Schließeinheit aufweist, die insbesondere als öffenbare Klappe oder als Rohrmanschette ausgebildet ist, um eine Relativbewegung des ersten Absorberelements in Bezug auf das zweite Absorberelement freizugeben. Eine derartige Ausführungsform der vorliegenden Erfindung bietet den Vorteil, dass eine solche Energieabsorptionseinheit einerseits technisch sehr einfach gestaltet und somit kostengünstig herstellbar ist und andererseits bei einem Aufprall eines Objektes auf das Fahrzeug, bei dem lediglich eine geringe Aufprallenergie freigesetzt wird oder zu absorbieren ist, nicht zwangsläufig die Energieabsorptionseinheit ausgetauscht zu werden braucht. Insofern bietet eine derartige Ausführungsform der vorliegenden Erfindung vorteilhaft die Möglichkeit, während des Betriebs eines Fahrzeugs entstehende Instandhaltungskosten oder Wartungskosten gering zu halten.

Gemäß einer weiteren Ausführungsform der vorliegenden Erfindung kann die Aktoreinheit zumindest eine Verriegelungseinheit aufweisen, die ausgebildet ist, um durch eine laterale Bewegung in Bezug auf eine Bewegungsrichtung des zweiten Absorberelementes die Relativbewegung zwischen dem ersten und zweiten Absorberelement freizugeben. Unter einer lateralen Bewegung kann eine Bewegung quer oder im Wesentlichen senkrecht zur Bewegungsrichtung des ersten Absorberelementes verstanden werden. Eine solche Ausführungsform der vorliegenden Erfindung bietet den Vorteil einer besonders schnellen Freigabe oder Sperrung der Relativbewegung zwischen dem ersten und zweiten Absorberelement ansprechend auf das Aktorsignal. Eine solche Ausführungsform der vorliegenden Erfindung bietet ferner den Vorteil einer Möglichkeit zur sehr schnellen Aktuierung der Aktoreinheit, da beim Vorsehen einer solchen lateralen Bewegung eines Elements zur Freigabe oder zum Sperren der Relativbewegung des zweiten Absorberelements in Bezug zum ersten Absorberelement bereits nach einem sehr kleinen Bewegungsweg dieses beweglichen Elements die Freigabe oder die Sperrung der genannten Relativbewegung erfolgt.

Besonders vorteilhaft ist eine Ausführungsform der vorliegenden Erfindung, bei der die Aktoreinheit zumindest eine Rückstelleinheit aufweist, die ausgebildet ist, um nach einer Freigabe oder einem Sperren der Relativbewegung des ersten Absorberelements in Bezug zum zweiten Absorberelement die Aktoreinheit in einen Zustand zurückzusetzen, in dem sich die Aktoreinheit vor einem Auftreten des Aktorsignals befunden hat. Eine derartige Ausführungsform der vorliegenden Erfindung bietet den Vorteil, dass die Energieabsorptionseinheit bei geringen Aufprallenergien bereits wieder in einen Initialzustand zurückgesetzt werden kann, sodass sich Austauschkosten nach Unfällen mit nur sehr geringer Aufprallenergieeinwirkung ohne Beschädigung der Energieabsorptionseinheit vermeiden lassen.

Besonders schnell kann eine Aktoreinheit eine Relativbewegung zwischen dem ersten und zweiten Absorberelement freigeben oder sperren, wenn gemäß seiner Ausführungsform der vorliegenden Erfindung die Aktoreinheit eine Stelleinheit aufweist, die ausgebildet ist, um unter Verwendung eines Wirbelstroms und/oder einer pyrotechnischen Treibladung ein Element der Aktoreinheit zu verschieben, um die Relativbewegung des ersten Absorberelements in Bezug zum zweiten Absorberelement freizugeben oder zu sperren.

Um beispielsweise ein Abschleppen eines Fahrzeugs zu ermöglichen, welches mit der hier vorgestellten Energieabsorptionseinheit ausgerüstet ist, und um hierbei zu verhindern, dass das erste Absorberelement aus dem zweiten Absorberelement (oder umgekehrt) herausgezogen wird, kann gemäß einer weiteren Ausführungsform der vorliegenden Erfindung eine Zugeinheit vorgesehen sein, die ausgebildet ist, um zumindest in einem Zustand, in dem eine Relativbewegung zwischen dem ersten und dem zweiten Absorberelement durch die Aktoreinheit freigegeben ist, einen Bewegungsweg des ersten Absorberelements gegenüber dem zweiten Absorberelement auf einen vordefinierten Maximalweg zu begrenzen, insbesondere wobei die Zugeinheit ausgebildet ist, um ein Herausziehen des ersten Absorberelements aus dem zweiten Absorberelement zu verhindern. Unter einer solchen Zugeinheit kann insbesondere eine Einheit verstanden werden, die bei einem Zug auf diese Zugeinheit eine Kraft übertragen kann, nicht jedoch bei einem Druck oder Schub auf diese Zugeinheit. Beispielsweise kann ein Seil oder Draht unter einer solchen Zugeinheit verstanden werden.

Um zu verhindern, dass sich das zweite Absorberelement bei einer Relativbewegung in Bezug zum ersten Absorberelement (oder umgekehrt) verkeilt, kann gemäß einer weiteren Ausführungsform der vorliegenden Erfindung die Aktoreinheit ausgebildet sein , um das erste Absorberelement bei einer Relativbewegung zwischen dem ersten und zweiten Absorberelement zu führen. Um eine besondere Stabilisierung der Relativbewegung zwischen dem zweiten und dem ersten Absorberelement sicherzustellen, kann die Aktoreinheit ausgebildet ist, um das erste Absorberelement bei einer Relativbewegung zwischen dem ersten und zweiten Absorberelement in eine Drehung um eine in Wirkrichtung ausgerichtete Achse zu versetzen.

Von Vorteil ist auch eine Ausführungsform der vorliegenden Erfindung, in der mehr als zwei Absorberelemente und/oder mehr als eine Aktuatoreinheit vorgesehen ist. Hierdurch lässt sich besonders einfach eine variable Einstellung von unterschiedlichen Steifigkeitsniveaus der adaptiven Energieabsorptionseinheit erreichen.

Günstig ist ferner eine andere Ausführungsform der vorliegenden Erfindung, bei der eine adaptive Energieabsorptionseinheit zum Absorbieren einer Aufprallenergie eines Objektes auf ein Fahrzeug geschaffen wird, wobei die Energieabsorptionseinheit die folgenden Merkmale aufweist:
- ein Absorberrohr, welches ausgebildet ist, um bei einer hohen Aufprallenergiemenge zur Absorption von Aufprallenergie in eine Bewegungsrichtung bewegt und dabei verformt zu werden;
- ein Absorberelement, das ausgebildet ist, um bei einer niedrigen Aufprallenergie zur Absorption von Aufprallenergie verformt zu werden; wobei das Absorberrohr dem Absorberelement in Bezug auf die Bewegungsrichtung nachgelagert ist; und
- eine Aktoreinheit, die ausgebildet ist, um ansprechend auf ein Aktorsignal eine Relativbewegung des Absorberrohrs in Bezug zum Absorberelement freizugeben oder zu sperren.
Unter einem Absorberelement kann beispielsweise auch ein elastisches, verformbares Element, beispielsweise aus einem Schaumstoff oder einem Schwamm-Material verstanden werden. In einer solchen Ausführungsform der vorliegenden Erfindung kann ebenfalls das diese Erfindung zugrunde liegende Konzept realisiert werden, in dem bei einer kompakten Bauweise der Energieabsorptionseinheit durch die Aktoreinheit in einem ersten Zustand eine hohe Steifigkeit der Energieabsorptionseinheit und in einem zweiten Zustand eine niedrige Steifigkeit der Energieabsorptionseinheit sichergestellt werden kann. Dabei sind das Absorberrohr und das Absorberelement in Bezug auf die Bewegungsrichtung des ersten Absorberelementes hintereinander angeordnet, sodass sich durch die Anordnung der einzelnen, eine Aufprallenergie des Objekt auf das Fahrzeug absorbierenden Teilgliedern der Energieabsorptionseinheit in einer gemeinsamen Achse ebenfalls wieder die Vorteile der vorstehend genannten anderen Ausführungsformen der vorliegenden Erfindung realisieren lassen.

Die Erfindung wird nachstehend anhand der beigefügten Zeichnungen beispielhaft näher erläutert. Es zeigen:
- Fig. 1: ein Blockschaltbild eines Fahrzeugs, in dem eine adaptive Energieabsorptionseinheit gemäß einem Ausführungsbeispiel der vorliegenden Erfindung verbaut ist;
- Fig. 2: eine schematische Querschnittsdarstellung durch ein Ausführungsbeispiel der vorliegenden Erfindung als adaptive Energieabsorptionseinheit;
- Fig. 3: eine weitere schematische Querschnittsdarstellung durch ein Ausführungsbeispiel der vorliegenden Erfindung als adaptive Energieabsorptionseinheit;
- Fig. 4: eine schematische Querschnittsdarstellung durch ein weiteres Ausführungsbeispiel der vorliegenden Erfindung als adaptive Energieabsorptionseinheit;
- Fig. 5: eine schematische Querschnittsdarstellung durch ein anderes Ausführungsbeispiel der vorliegenden Erfindung als adaptive Energieabsorptionseinheit;
- Fig. 6: eine schematische Querschnittsdarstellung durch einen Teil eines Ausführungsbeispiels als adaptive Energieabsorptionseinheit;
- Fig. 7: eine schematische Querschnittsdarstellung durch einen Teil eines Ausführungsbeispiels der vorliegenden Erfindung als adaptive Energieabsorptionseinheit;
- Fig. 8: eine schematische Querschnittsdarstellung durch einen Teil eines Ausführungsbeispiels als adaptive Energieabsorptionseinheit;
- Fig. 9: eine schematische Querschnittsdarstellung durch einen Teil eines Ausführungsbeispiels der vorliegenden Erfindung als adaptive Energieabsorptionseinheit;
- Fig. 10: unterschiedliche Darstellungen zu Stellungen des Verriegelungselementes zur Erläuterung eines aktiven oder inaktiven Verriegelungsmechanismus;
- Fig. 11: eine Querschnittsdarstellung eines Ausführungsbeispiels eines Verriegelungselementes;
- Fig. 12: eine Seitenansicht durch einen Querschnitt eines Ausführungsbeispiels der vorliegenden Erfindung als adaptive Energieabsorptionseinheit;
- Fig. 13: eine schematische Querschnittsdarstellung durch einen Teil eines Ausführungsbeispiels der vorliegenden Erfindung als adaptive Energieabsorptionseinheit;
- Fig. 14: eine Querschnittsdarstellung eines weiteren Ausführungsbeispiels eines Verriegelungselementes;
- Fig. 15: unterschiedliche Darstellungen zu Stellungen des Verriegelungselementes zur Erläuterung eines aktiven oder inaktiven Verriegelungsmechanismus;
- Fig. 16: eine schematische Querschnittsdarstellung durch einen Teil eines Ausführungsbeispiels der vorliegenden Erfindung als adaptive Energieabsorptionseinheit;
- Fig. 17: eine Querschnittsdarstellung eines weiteren Ausführungsbeispiels eines Verriegelungselementes;
- Fig. 18: unterschiedliche Darstellungen zu Stellungen des Verriegelungselementes zur Erläuterung eines aktiven oder inaktiven Verriegelungsmechanismus;
- Fig. 19: eine Seitenansicht durch einen Querschnitt eines Ausführungsbeispiels der vorliegenden Erfindung als adaptive Energieabsorptionseinheit;
- Fig. 20: schematische Querschnittsdarstellungen durch einen Teil eines Ausführungsbeispiels der vorliegenden Erfindung als adaptive Energieabsorptionseinheit;
- Fig. 21: eine Querschnittsdarstellung eines weiteren Ausführungsbeispiels eines Verriegelungselementes;
- Fig. 22: unterschiedliche Darstellungen zu Stellungen des Verriegelungselementes zur Erläuterung eines aktiven oder inaktiven Verriegelungsmechanismus;
- Fig. 23: perspektivische Ansichten auf ein Ausführungsbeispiel der vorliegenden Erfindung als adaptive Energieabsorptionseinheit in unterschiedlichen Verriegelungszuständen;
- Fig. 24: eine schematische Querschnittsdarstellung durch ein weiteres Ausführungsbeispiel der vorliegenden Erfindung als adaptive Energieabsorptionseinheit;
- Fig. 25: ein Ablaufdiagramm einer Vorgehensweise bei der Bestimmung eines Steifigkeitsgrades des adaptiven Energieabsorptionselementes gemäß einem Ausführungsbeispiel der vorliegenden Erfindung; und
- Fig. 26: ein Ablaufdiagramm eines Verfahrens gemäß einem Ausführungsbeispiel der vorliegenden Erfindung

In der nachfolgenden Beschreibung bevorzugter Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

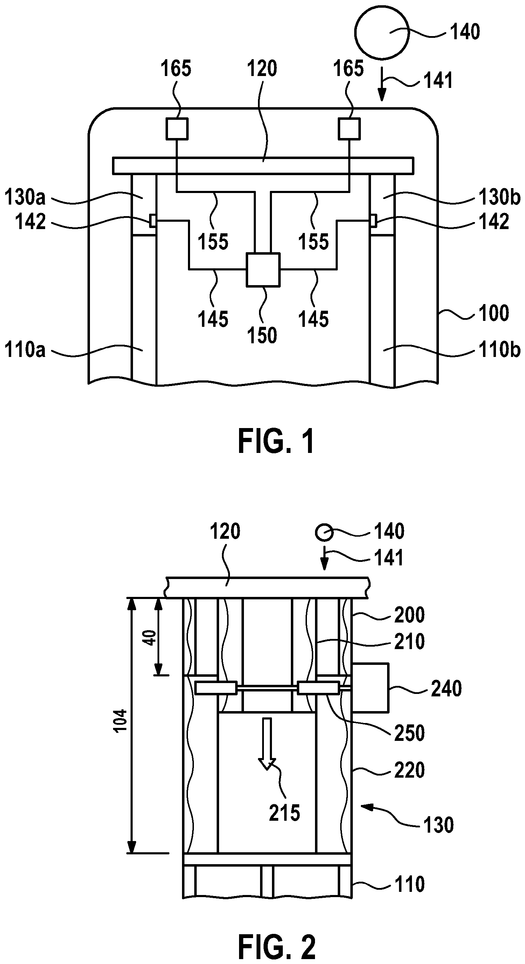

Fig. 1 zeigt eine prinzipielle Darstellung eines Fahrzeugs 100, welches einen auf der linken Fahrzeugseite angeordneten Längsträger 110a und einen auf der rechten Fahrzeugseite angeordneten Längsträger 110b aufweist. Ferner weist das Fahrzeug 100 einen Querträger 120 auf, der mittels einer ersten Energieabsorptionseinheit 130a mit dem linken Längsträger 110a und mittels einer zweiten Energieabsorptionseinheit 130b mit dem rechten Längsträger 110b verbunden ist. Die beiden, mit dem Bezugszeichen 130a und 130b bezeichneten Energieabsorptionseinheiten sind nun dazu ausgelegt, eine Energie eines Aufpralls eines Objektes 140 aus der Aufprallrichtung 141 auf das Fahrzeug 100 zu absorbieren. Das Objekt 140 kann beispielsweise ein Baum, ein anderes Fahrzeug oder auch ein Fußgänger oder eine Person im Umfeld des Fahrzeugs 100 darstellen. Diese Energieabsorption durch die Energieabsorptionseinheiten 130a und 130b dient dazu, die Gefährdung eines Fahrzeuginsassen in dem Fahrzeug 100 zu reduzieren oder ganz zu vermeiden. Zugleich ist es auch möglich, durch die Energieabsorptionseinheiten 130a und 130b eine von dem Fahrzeug 100 ausgehende Gefahr für das Objekt 140, beispielsweise wenn dieses ein Fußgänger ist, zu reduzieren. Hierzu können beispielsweise die Energieabsorptionseinheiten 130a und 130b ausgebildet sein, um bei unterschiedlichen Aufprallenergien, die ein Aufprall des Objekts 140 in der Aufprallrichtung 141 auf das Fahrzeug 100 freisetzt, unterschiedliche Steifigkeit zu haben und somit auch unterschiedliche Aufprallenergieabsorptionsniveaus zur realisieren. Beispielsweise können, wenn das Objekt 140 ein Fußgänger ist, die Energieabsorptionseinheiten 130a und 130b derart eingestellt werden, dass sie lediglich eine geringe Energieabsorptionsfähigkeit aufweisen (das heißt in einen Zustand "weich" eingestellt werden), um den Aufprall des Objektes 140 (das heißt den Fußgänger) auf das Fahrzeug 100 für das Objekt 140 möglichst verletzungsrisikoarm auszugestalten. Ist das Objekt 140, jedoch beispielsweise ein entgegenkommendes Fahrzeug, sollten die Energieabsorptionseinheiten 130a und 130b (oder zumindest eine von diesen Energieabsorptionseinheiten) derart eingestellt werden, dass sie eine hohe Energieabsorptionsfähigkeit aufweisen (das heißt in einen Zustand "hart" eingestellt werden), um ein Verletzungsrisiko für einen Insassen des Fahrzeugs 100 zu minimieren oder ganz zu vermeiden. Durch diese Verstellungsmöglichkeit der Aufprallenergieabsorptionsfähigkeit der Energieabsorptionseinheit(en)130 kann/können diese auch als adaptiv bezeichnet werden.

Die Umschaltung der Energieabsorptionsfähigkeit der Energieabsorptionseinheiten 130a und 130b kann dabei durch einen Aktor 142 in jeder der Energieabsorptionseinheiten 130a und 130b, ansprechend auf ein Aktorsignal 145, erfolgen, welches von einer Aufprallerkennungseinheit 150 bereitgestellt wird. Diese Aufprallerkennungseinheit 150 kann dabei beispielsweise ausgebildet sein, um eine Auswertung von Sensordaten 155 vorzunehmen, die beispielsweise von einem oder mehreren Sensoren wie einem Radarsensor 160 oder einem Ultraschallsensor 165 bereitgestellt werden. Diese Sensoren 160 bzw. 165 sind dabei ausgebildet, um einen Bereich vor dem Fahrzeug 100 zu überwachen und diejenige Aufprallenergie abzuschätzen, mit der das Objekt 140 auf das Fahrzeug 100 aufprallen wird. Denkbar ist ferner auch, dass alternativ oder zusätzlich zu den Sensoren 160 bzw. 165 andere Sensoren vorgesehen sind, die auf anderen physikalischen Messprinzipien basieren als die Sensoren 160 bzw. 165, beispielsweise Beschleunigungen oder Körperschall erfassen, und die je ein Signal liefern, aus dem alleine oder gemeinsam mit anderen Signalen die zu erwartende Aufprallenergie eines Aufpralls des Objekts 140 auf das Fahrzeug 100 bestimmt werden kann.

In dem nachfolgend näher beschriebenen Ansatz werden besonders vorteilhafte Möglichkeiten für die Ausgestaltung des Aufbaus von solchen Energieabsorptionseinheiten 130a und 130b vorgestellt, wobei natürlich nicht beide der in Fig. 1 dargestellten Energieabsorptionseinheiten 130a und 130b identisch ausgestaltet sein brauchen. Die nachfolgende Beschreibung wird daher lediglich anhand einer Energieabsorptionseinheit ausgeführt, wobei diese Energieabsorptionseinheit aus Gründen der einfacheren Darstellung mit dem Bezugszeichen 130 versehen ist.

Fig. 2 zeigt eine schematische Querschnittdarstellung eines Ausführungsbeispiels einer Energieabsorptionseinheit 130. Die Energieabsorptionseinheit 130 ist zwischen dem Querträger 120 und hier dem Längsträger 110b verbaut, wobei der Längsträger 110b nachfolgend aus Gründen der einfacheren Beschreibung und der für die Funktionsfähigkeit der Energieabsorptionseinheit auch bestehenden Austauschbarkeit mit dem rechten Längsträger 110a lediglich mit dem Bezugszeichen 110 versehen ist. Der Längsträger 110 kann beispielsweise zwei Kammern aufweisen, um eine Steifigkeit des Längsträgers 110 zu verstärken.

Die Energieabsorptionseinheit 130 kann ein erstes Absorberrohr 200 aufweisen, welches beispielsweise als (faltbares) Rohr oder Profil ausgestaltet ist. Dabei kann das erste Absorberrohr 200 aus einem Material wie Kunststoff, Aluminium oder Organoblech hergestellt sein und eine geringe Fähigkeit zur Absorption von Aufprallenergie aufweisen. Beispielsweise kann sich das erste Absorberrohr 200 ausgebildet sein, um bei einer Kraft von kleiner als 10 Kilonewton in eine Richtung 215 verformt oder zerstört zu werden, wobei die Richtung 215 die Wirkrichtung der Aufprallenergie darstellen kann. Ferner kann die Energieabsorptionseinheit 130 ein zweites Absorberrohr 210 aufweisen, welches beispielsweise ebenfalls als (faltbares) Rohr oder Profil ausgestaltet ist. Das zweite Absorberrohr 210 kann dabei beispielsweise aus einem Metallmaterial hergestellt sein, und eine größere Fähigkeit zur Aufprallenergieabsorption aufweisen, als das erste Absorberrohr 200. Beispielsweise kann das zweite Absorberrohr 210 derart ausgebildet sein, dass es bei einer in eine Richtung 215 wirkenden Kraft von 100 bis 200 Kilonewton die Form ändert oder zerstört wird. Die Richtung 215 kann dabei ebenfalls die Wirkrichtung der Aufprallenergie darstellen, die dazu führen wird, dass sich das zweite Absorberrohr 210 ebenfalls in diese Richtung 215 bewegen wird. Das zweite Absorberrohr 210 ist dabei in das erste Absorberrohr 200 eingeschoben oder eingeführt, wobei sowohl ein Ende des ersten Absorberrohrs 200 als auch ein Ende des zweiten Absorberrohrs 210 an den Querträger 120 befestigt ist. Das erste Absorberrohr 200 und das zweite Absorberrohr 210 können dabei als gemeinsam bewegliches erstes Absorberelement verstanden werden.

Das erste Absorberrohr 200 ist an einem dem Querträger 120 gegenüberliegenden Ende ferner auf ein drittes Absorberrohr 220 aufgestützt, das heißt an diesem angeordnet und/oder befestigt, wobei das dritte Absorberrohr 220 ebenfalls als (faltbares) Rohr oder Profil ausgestaltet ist. Das dritte Absorberrohr 220 kann dabei beispielsweise ebenfalls aus einem Metall hergestellt sein und ausgebildet sein, um erst bei einer Aufprallenergie verformt zu werden, die höher ist, als die Aufprallenergie, die erforderlich ist, um das zweite Absorberrohr 210 zu verformen oder zu zerstören. Beispielsweise kann das dritte Absorberrohr 220 derart ausgelegt sein, dass es erst bei einer Krafteinwirkung in Richtung 215 von mehr als 100 Kilonewton verformt oder zerstört wird. Weiterhin ist das dritte Absorberrohr 220 ausgebildet, um das zweite Absorberrohr 210 bei einer Bewegung in Richtung 215 aufzunehmen. Das dritte Absorberrohr kann auch als zweites Absorberelement verstanden werden, welches gegenüber dem ersten Absorberelement beweglich angeordnet ist.

Um nun eine adaptive Anpassung der Aufprallenergieabsorptionsfähigkeit der Energieabsorptionseinheit 130 zu erreichen, ist nun ein Aktuator bzw. eine Aktoreinheit 240 vorgesehen, die gemäß nachfolgend näher beschriebenen Mechanismen eine Relativbewegung des ersten 200 und zweiten Absorberrohrs 210 gegenüber dem dritten Absorberrohr 220 zu sperren oder freigeben kann. Hierzu kann die Aktoreinheit 240 beispielsweise unter Verwendung eines Wirbelstroms oder einer pyrotechnischen Einheit eine Verriegelungseinheit 250 (beispielsweise in der Form eines Bolzens) in Bezug auf die Richtung 215 lateral verschieben, sodass ein Widerstand, der einer Bewegung des zweiten Absorberrohrs 210 in Bezug auf das dritte Absorberrohr 220 entgegengesetzt wird, beeinflusst werden kann.

Dies bedeutet, dass ein Objekt 140, welches entsprechend der Einschlagrichtung 141 auf das Fahrzeug 100 beziehungsweise den Querträger 120 auftrifft, je nach Stellung der Verriegelungseinheit 250 der Aktoreinheit 240 eine hohe oder niedrige Steifigkeit und somit eine hohe Aufprallenergieabsorptionsfähigkeit oder eine kleine Aufprallenergieabsorptionsfähigkeit der Energieabsorptionseinheit 130 erfährt.

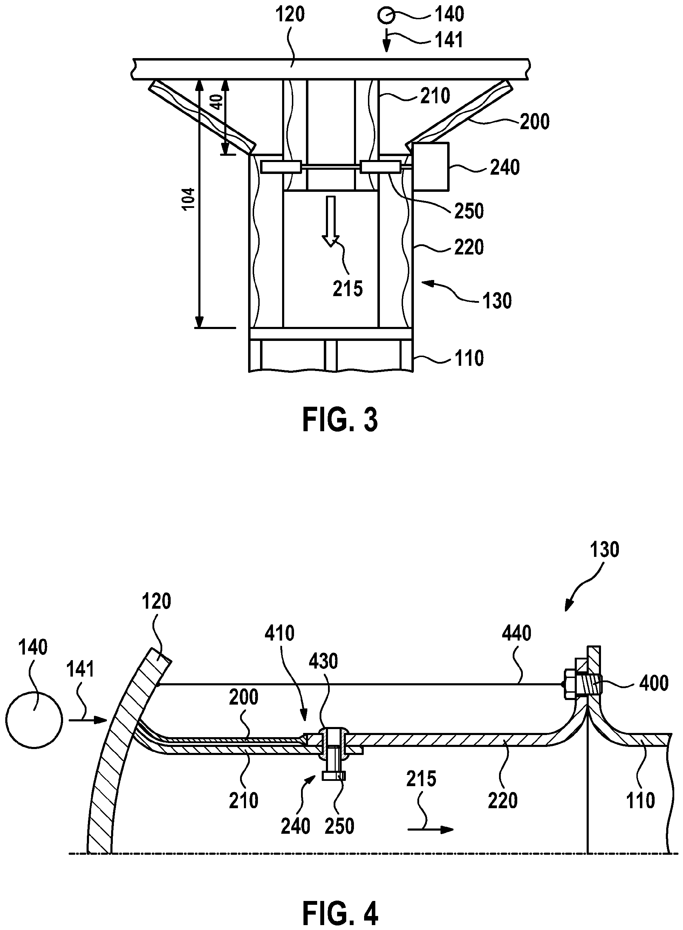

Fig. 3 in zeigt eine schematische Querschnittsdarstellung eines Ausführungsbeispiels der Energieabsorptionseinheit 130, wenn eine durch den Aufprall des Objekts 140 auf das Fahrzeug übertragene Kraft auf den Querträger 120 wird und das erste Absorptionsrohr 210 zur Absorption von Aufprallenergie deformiert oder zerstört wird. Dabei kann der Verriegelungsbolzen 250 in einer Stellung sein, in der er eine Relativbewegung des zweiten Absorberrohrs 210 gegenüber dem ersten Absorberrohr 200 sperrt.

Ein besonderer Aspekt der hier vorgestellten Ausführungsbeispiele kann somit in der Bereitstellung von verschiedenen Kraftniveaus für eine Energieabsorption in Fahrzeugstrukturen gesehen werden. Heutzutage weisen die Lastpfade in Fahrzeugkarosserien Steifigkeitssprünge auf, wobei diese Sprünge oft an Bauteilgrenzen auftreten. Der hier vorgeschlagene Ansatz ermöglicht die Vereinigung von verschiedenen Bauteilen bzw. Bauteileigenschaften in einem System, wobei in diesem System die Steifigkeit über die Längsausprägung des Systems in mehreren Stufen eingestellt werden kann. Dies ist vorteilhaft, um mit ein und derselben Struktur situationsgerecht die passende Steifigkeit bereitstellen zu können. Auf ein Signal 145 hin, welches die Situation klassifiziert, wird die entsprechende Steifigkeit gewählt, bzw. die entsprechende Kraft-Weg-Kennung. Durch die Vereinigung der Funktion mehrerer Bauteile in einem kann die Bauteillänge zudem noch gekürzt werden. Des Weiteren können durch das hier vorgeschlagene System große Steifigkeitsdifferenzen in einem System abgebildet werden.

Allgemein ist anzumerken, dass der hier vorgestellte Ansatz Kraftniveaus, die mit der Struktur dargestellt werden sollen, zur Absorption von Aufprallenergie realisieren können soll, die zum einen weit auseinanderliegen, zum anderen kann das niedrigere Kraftniveau um einen großen Faktor, z. B. 10- 50, kleiner als das höhere gewählt werden. Solche Kraftniveauunterschiede in Fahrzeuglastpfaden treten beispielsweise im Längslastpfad von Vorderwagenstrukturen auf. Der Fußgängerschutz erfordert ein sehr geringes Kraftniveau von kleiner als 10 Kilonewton, wobei für den Insassenschutz Kraftniveaus von mehr als 100 kN erforderlich sind.

Die Gemeinsamkeit der hier vorgestellten Ausführungsbeispiele der Erfindung kann darin gesehen werden, dass verschiedene Strukturen durch einen Aktuator in Abhängigkeit des Crashfalls gegeneinander verriegelt werden. Die Ansteuerung des Aktors erfolgt aufgrund des Crashtyps der u.a. beispielsweise von Geschwindigkeit und Hindernisart abhängt. Um die Crashart zu bewerten, ist eine entsprechende Sensorik 160, 165 und Auswerteeinrichtung 150 notwendig auf die in der vorliegenden Beschreibung aber nicht weiter eingegangen wird.

Fig. 4 zeigt eine schematische Querschnittansicht eines weiteren Ausführungsbeispiels der vorliegenden Erfindung als Energieabsorptionseinheit 130. In dieser Ausführungsform erfolgt eine Parallelschaltung von unterschiedlichen Absorberrohren. Dabei umfasst die Energieabsorptionseinheit 130 wieder ein erstes Absorberrohr 200, ein zweites Absorberrohr 210, ein drittes Absorberrohr 220 und einen Aktor 240. Das erste Absorberrohr 200 ist hier wie in dem in den Figuren 2 und 3 dargestellten Ausführungsbeispiel als Faltelement ausgebildet und dient der Energieabsorption und der Aufnahme von x-Kräften. Das erste Absorberrohr kann dabei ausgebildet sein, um bei einer Kraft von kleiner als 10 kN in Richtung 215 verformt oder zerstört zu werden. Das zweite Absorberrohr 210 kann ausgebildet sein, um bei einer Kraft von 100 bis 200 kN verformt zu werden, wobei das dritte Absorberrohr 220 ausgebildet ist, um bei einer Kraft von ebenfalls 100-200 kN verformt oder zerstört zu werden. Das dritte Absorberrohr 220 kann mittels einer Schraubverbindung 400 an dem Längsträger befestigt sein. Die Aktoreinheit 240 kann in einem Flanschbereich 410 zwischen dem ersten Absorberrohr 200 und dem dritten Absorberrohr 220 angeordnet sein. Der Flanschbereich 410 kann in einer einteiligen Ausführung durch flexibles Walzen, einer zweiteiligen Ausführung, beispielsweise durch einen verschraubbaren Flansch oder in einer zweiteiligen Ausführung mit einem Überlapp zwischen dem ersten Absorberrohr 200 und dem dritten Absorberrohr 220 ausgeführt sein.

Die Aktoreinheit 240 bzw. ein Verriegelungsbolzen 250 der Aktoreinheit 240 kann durch eine Montage von innen oder außen eingebracht werden. Neben einem solchen Verriegelungsbolzen 250 können auch andere Elemente verwendet werden. Weiterhin kann auch eine Stellelementführung durch eine Hülse 430 vorgesehen sein, die eine verbesserte Führung des Verriegelungsbolzens 250 (Schaltelementes) sowie eine Erhöhung der Querkrafttauglichkeit dienen kann. Auch kann eine solche Hülse der Aufnahme von Zugkräften und der Erhöhung der Stabilität dienen. Ein Versagen, d. h. Abscheren der Hülse kann beispielsweise bei der gleichen Kraft in Richtung 215 vorgesehen sein, bei der auch das erste Absorberrohr 200 verformt bzw. zerstört wird, hier beispielsweise bei einer Kraft von kleiner 10 kN.

Weiterhin kann auch die Einbauposition der Aktoreinheit 240 variabel sein. Diese Aktoreinheit 240 kann beispielsweise im Längsträger 110 angeordnet sein und somit einen Flansch bilden, wie es in mit Bezug zu einem nachfolgenden beschriebenen Ausführungsbeispiel näher erläutert ist, oder es kann eine Fail-Safe-Option realisiert werden, bei der die Aktoreinheit 240 weit vorne (d. h. in Richtung des Querträgers 120) angeordnet ist.

Das mit Bezug auf die Fig. 4 dargestellte Ausführungsbeispiel ermöglicht entsprechend einer erkannten Crashart (und damit einer erkannten Aufprallschwere unterschiedliche Steifigkeiten) unterschiedliche Aufprallenergieabsorptionsfähigkeiten der Energieabsorptionseinheit 130 zu implementieren.

### a) Hohes Kraftniveau

Um ein hohes Kraftniveau im Crash zu realisieren, verriegelt der Aktuator (die Aktoreinheit 240) die Faltelemente (Absorberrohre) 210 und 220. Hierbei wird das zweite Absorberrohr 210 (d. h. "Faltelement mit hohem Kraftniveau") und gleichzeitig das erste Absorberrohr 200 ("EA-Element mit niederem Kraftniveau", (EA=Energieabsorption)) bei einer Aufprallenergieabsorption durch ein auf das Fahrzeug aufprallendes Objekt verformt. Nach deren Deformation wird zudem das dritte Absorberrohr 220 ("Faltelement mit hohem Kraftniveau 2") deformiert. Als besondere Ausprägung entspricht die für die Deformation des dritten Absorberrohres 220 ("Faltelement mit hohem Kraftniveau 2") erforderlichen Kraft der Summe aus der für die Deformation des ersten Absorberrohres 200 und zweiten Absorberrohres 210 erforderlichen Kraft (d. h. des "Faltelements mit hohem Kraftniveau 1" und des "EA-Elements mit niedrigem Kraftniveau"). Hierdurch wird ein konstanter Kraftverlauf über den gesamten Deformationsweg realisiert.

### b) Niederes Kraftniveau

Das niedere Kraftniveau wird durch ein Entriegeln der Strukturen (d. h. des Verriegelungsbolzens 250) abgebildet. Im Crash deformiert sich das erste Absorberrohr 200 ("EA-Element niederes Kraftniveau"). Gleichzeitig schiebt sich das zweite Absorberrohr 210 ("Faltelement hohes Kraftniveau 1 ") in das dritte Absorberrohr 220) ("Faltelement hohes Kraftniveau 2") ohne Axialkräfte aufzunehmen.

In diesem Ausführungsbeispiel können weitere Merkmale der genannten Komponenten der Energieabsorptionseinheit vorgesehen sein.

Ein erster Aspekt betrifft die Absorberrohre bzw. Profile.
Die Profile können als faltbare Struktur, als deformierbarer Schaum und/oder als Kunststoffelement ausgeführt sein, das die Energie durch Zerstörung aufnimmt.

Ein zweiter Aspekt betrifft den Aktuator (d. h. die Aktoreinheit 240). Der Aktuator 240 und Verriegelungsmechanismus 250 kann als ein oder mehrere Bolzen mit radialer Verschiebung bzw. Verschieblichkeit, ein oder mehrerer radial verschieblicher Ringsegmente und/oder als Keilelemente ausgeführt sein.

Der Aktuator 240 kann, wie in Fig. 4 dargestellt, direkt nach der erforderlichen Deformationslänge des ersten Absorberrohres 200 ("EA-Element niederes Kraftniveau") im Flanschbereich 410 angeordnet sein, oder im Bereich des Längsträgers 110 angeordnet sein.

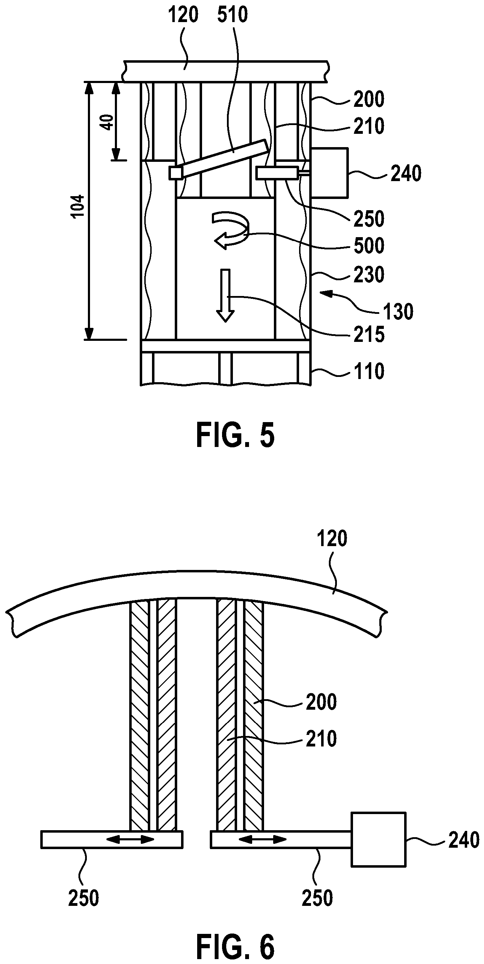

Ein weiterer Aspekt von Modifikationen kann die Profilbewegung, d. h. die Bewegungsmöglichkeit zwischen den einzelnen Absorberrohren betreffen. In Fig. 4 werden die Profile 200 und 210 axial verschoben bzw. durch Krafteinwirkung in die Bewegungsrichtung 215 des zweiten Absorberrohres 210 verformt. Zudem ist denkbar, dass das zweite Absorberrohr 210 ("Faltelement hohes Kraftniveau 1") bei der axialen Verschiebung zusätzlich eine Rotation 500 entsprechend der Darstellung aus Fig. 5 ausführt. Fig. 5 zeigt hierbei eine schematische Querschnittdarstellung durch ein weiteres Ausführungsbeispiel einer Energieabsorptionseinheit 130. Hierdurch ergeben sich zusätzliche Optionen für einen Verriegelungsmechanismus. Das zweite Absorberrohr 210 wird hierbei durch eine entsprechende Ausbildung der Aktoreinheit 240 bzw. der Verriegelungseinheit 250 unter Verwendung einer Schräge 510 in eine Rotation versetzt, bei der lediglich eine Eindrehung des zweiten Absorberrohres 210 in das dritte Absorberrohr 220 erfolgt; eine Absorption von Aufprallenergie erfolgt dabei jedoch durch eine Verformung eines der Absorberrohre, nicht jedoch primär über den Gewindewiderstand.

Ein weiterer Aspekt der kann in einer weiteren Variationsmöglichkeit der Hülse 420 gesehen werden. Die Hülse 420 dient als Führung des Verriegelungselementes 250. Hierdurch soll ein sicheres Ent- bzw. Verriegeln mit möglichst geringen Aktuatorkräften ermöglicht werden. Weitere Vorteile der Hülse sind eine erhöhte Aufnahmefähigkeit von Querkräften, eine Aufnahme von Zugkräften im Abschleppfall, eine Verbindung der Faltelemente zur Aufnahme der Betriebskräfte, die während der Fahrt auf den Querträger und dessen Anbauteile wirken (z. B. Schwingungen,...).

Als weiteres Merkmal kann die Hülse mit möglichst geringen Kräften abscherbar sein, um ein niedriges Kraftniveau zur Absorptionsenergieaufnahme zu realisieren. Hierbei scheren die Profile durch ihre Axialbewegung (und/oder Rotation) die Hülse ab. In einer Fail-Safe-Option steht als "Sicherheitsreserve" für den Insassen nach dem Crash noch ein " hohes Kraftniveau" durch das dritte Absorberrohr 220 ("Faltelement hohes Kraftniveau 2") zur Verfügung. Dies wäre z. B. relevant, wenn nach einem Fußgängercrash noch ein zweiter Crash folgen würde. Der Vorteil der "Sicherheitsreserve" kommt auch im Fehlerfall zum Tragen, wenn der Aktor oder die Sensorik von einem Crash "niederes Kraftniveau" ausgeht, obwohl ein Crash mit "hohem Kraftniveau" erfolgt.

Ein Ausführungsbeispiel gemäß der Darstellung aus Fig. 4 bietet dabei Vorteile in Bezug auf eine Adaptierbarkeit der Steifigkeitsstufen über eine Materialauswahl und -stärke. Zugleich kann eine Montage an Längsträger 110 oder Querträger 120 erfolgen. Als zusätzliche Option kann beispielsweise eine Abschlepp-Funktion realisiert werden, beispielsweise über einen reversiblen Aktuator 240, der eine Erhöhung der x-Kraft-Aufnahme ermöglicht, oder über ein zusätzliches Zugelement 440, das beispielsweise als Stahlseil ausgebildet ist, und zwischen Längsträger und Querträger bzw. das zweite Absorptionsrohr 210 verbaut ist. Das erste Absorptionsrohr 200 kann als reversibles Element ausgebildet sein und somit eine Rückstellung erlauben (Bumpertest).

Ferner ist eine Fail-Safe-Option über die Einbauposition des Aktuators 240 möglich. Nach der für den Fußgängerschutz notwendigen Deformationslänge des Absorberrohres 200 steht hierbei noch das hohe Kraftniveau mit der Deformationslänge des Absorberrohres 220 zur Verfügung.

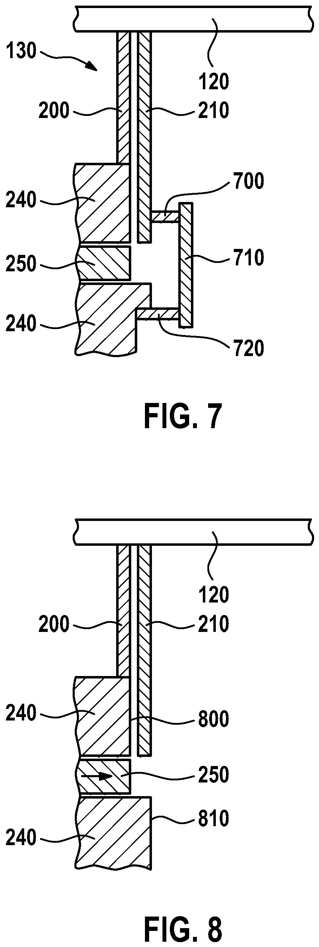

Fig. 6 zeigt eine schematische Querschnittsdarstellung eines Funktionsprinzips der Umschaltung der Energieabsorptionseinheit zwischen zwei Steifigkeitsstufen. Dabei sind zwei Rohre 200 und 210 (Absorberrohre) ineinander angeordnet, wobei die beiden Rohre 200 und 210 am Querträger 120 anstoßen bzw. dort befestigt sind. Die in laterale Richtung in Bezug auf die Haupterstreckungsrichtung der Rohre 200 und 210 verschieblichen Verriegelungsstifte 250 gegeben in einem ersten, ausgerückten Zustand, der in der Fig. 6 nicht dargestellt ist, eine Bewegung des inneren Rohres 210 frei, wenn dieses in der Fig. 6 nach unten nicht mehr abgestützt ist. Zugleich wird in diesem Zustand durch die Verriegelungsstifte 250 verhindert, dass das äußere Rohr 200 ebenfalls in der Fig. 6 nach unten geschoben werden kann, sodass bei einer Krafteinwirkung auf den Querträger 120 nun das äußere Rohr 200 verformt wird, um Aufprallenergie zu absorbieren. Sind dagegen durch die Aktoreinheit 240 die Verriegelungsstifte 250 in der in Fig. 6 dargestellten Position, wird das innere Rohr 210 gegen eine Bewegung nach unten in der Fig. 6 gesperrt, sodass bei einem Aufprall des Objektes auf den Querträger 120 nun sowohl das äußere als auch das innere Rohr 200 bzw. 210 verformt, und kann somit Energie aufnehmen. In diesem zuletzt beschriebenen Zustand ist die Energieabsorptionseinheit 130 steifer als im zuvor beschriebenen Zustand, in dem die Verriegelungsstifte 250 ausgerückt sind. Dabei kann angemerkt werden, dass gemäß einem Ausführungsbeispiel der vorliegenden Erfindung das äußere Rohr 200 bereits bei einer geringen einwirkenden Kraft zerbröseln wird, wogegen das innere Rohr 210, das günstigerweise aus Metall besteht, erst bei einer Einwirkung einer hohen Kraft gefaltet und somit verformt wird. Denkbar ist auch eine Variante des vorstehend genannten Ausführungsbeispiels der vorliegenden Erfindung, wie es in der Fig. 7 als Teilschnittdarstellung abgebildet ist. Dabei ist das innere Rohr 210 mit einem elastischen Boden 700, der an dem inneren Rohr 210 fixiert ist, über eine Schraube 710 mit einem weiteren elastischen Boden 720 verbunden, der an einem Vorsprung der Aktoreinheit 240 bzw. dem Flansch 410 eingehängt und vorgespannt ist. Auf diese Weise kann das innere Rohr 210, das beispielsweise mit dem Querträger 120 verbunden und an diesem befestigt ist, dazu verwendet werden, um das äußere Rohr 200 einerseits ein- bzw. vorzuspannen und hierdurch noch eine gewünschte Steifigkeit des äußeren Rohres 200 in bestimmten Grenzen einzustellen und andererseits kann der Querträger 120 gehalten werden. Beispielsweise kann auf diese Weise verhindert werden, dass der Querträger 120 beim Abschleppen des Fahrzeugs herausgezogen wird.

Fig. 8 zeigt nochmals eine Teildarstellung des in Fig. 6 dargestellten Ausführungsbeispiels mit mehr Details. Das äußere Rohr 200 kann bereits bei einer geringen Krafteinwirkung (d. h. bei einem niedrigen Kraftniveau) zerbröseln. Das innere Rohr 210, welches beispielsweise aus Metall ist, kann erst bei einer hohen Krafteinwirkung verformt bzw. gefaltet werden, um Aufprallenergie zu absorbieren. Die Aktoreinheit 240 kann ferner als Führungselement verwendet werden, um bei einer "weichen" Einstellung, d.h. bei einem Einwirken eines niedrigen Kraftniveaus, eine Bewegung des inneren Rohres 210 nach unten in der Fig. 8 zu führen (Führungsflanke 800). In dieser weichen Einstellung ist der Verriegelungsstift 250 in der in Fig. 8 dargestellten Position angeordnet. Soll nun die Energieabsorptionseinheit 130 in einen Zustand mit hoher Steifigkeit geschaltet werden, ist das Verriegelungselement 250 durch die Aktoreinheit 240 als Schieber in Richtung des in der Fig. 8 eingezeichneten Pfeils zu bewegen, sodass der Schieber 250 radial nach innen in Richtung des inneren Rohres 210 bewegt wird. Dabei können auch mehrere der in Fig. 8 dargestellten Schieber 250 (Verriegelungsstifte) radial am Umfang um das innere Rohr 210 verteilt angeordnet sein, um eine gleichmäßige Abstützung des inneren Rohres 210 sicherzustellen. Der Schieber 250 selbst kann durch einen Vorsprung 810 des unteren Teils der Aktoreinheit 240 abgestützt werden, so dass diese Abstützung als Back-Up für eine hohe Krafteinwirkung auf das innere Rohr 210 dient. Bei einer solchen hohen Krafteiwirkung kann nun zur Energieaufnahme eine Faltung des inneren Rohres 210 (beispielsweise nach innen in den Hohlraum des inneren Rohres 210) erfolgen.

Nachfolgend wird detaillierter auf mögliche Ausführungsbeispiele für die Umsetzung der Aktuierung durch die Aktoreinheit 240 eingegangen.

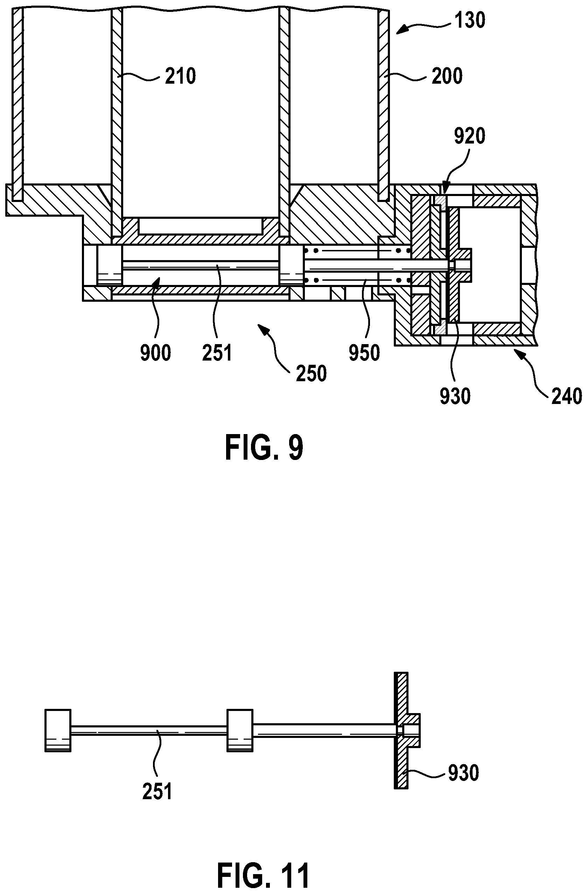

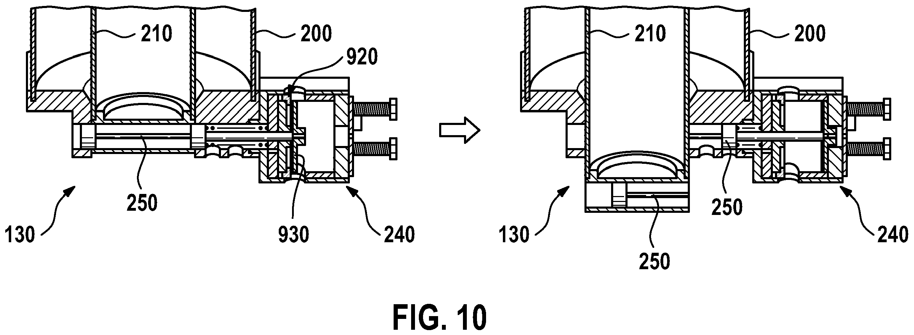

Fig. 9 zeigt eine schematische Querschnittdarstellung durch einen Teil eines Ausführungsbeispiels einer Energieabsorptionseinheit 130, aus der ein Verriegelungsmechanismus bestehend aus Aktuator 240 und Verriegelungseinheit 250 hervorgeht. Im aktivierten Zustand, wie sie in der Fig. 9 und der Fig. 10 als schematische Querschnittdarstellung durch einen Teil eines Ausführungsbeispiels einer Energieabsorptionseinheit 130 dargestellt ist, bildet die Verriegelungseinheit 250 (bzw. -bolzen) einen festen Anschlag 900 zur Begrenzung eines Bewegungswegs des inneren Rohres 210 und zur Abstützung des inneren Rohres 210. Bei einem Aufprall eines Objektes auf das Fahrzeug wird das äußere Rohr 200 und das innere Rohr 210 deformiert bzw. zerstört. In dem Zustand kann folglich eine hohe Energiemenge absorbiert werden.

Durch die Schaltung des Aktuators 240 wird die Verriegelungseinheit 250 deaktiviert. Hierbei wird der Aktuator 240, der als Wirbelstromaktor 920 ausgestaltet ist, bestromt und beaufschlagt eine Scheibe 930 des Verriegelungsbolzens 250 mit einem Kraftimpuls, woraufhin der Bolzen 250 verschoben wird. Kennzeichnend für den Wirbelstromaktor 920 ist ein sehr kurzer und sehr hoher Kraftimpuls. Alternativ kann auch ein pyrotechnischer Aktor eingesetzt werden. Durch die bei einem Aufprall eines Objekts auf das Fahrzeug auf das innere Rohr 210 wirkende Kraft verschiebt sich der Anschlag 900 und schert mit einer nur geringen Kraft den dünnen Schaft des Bolzens 250 ab. Eine solche Situation, in der der Bolzen 250 abgeschert und das innere Rohr 210 ausgelenkt ist, ist in der rechten Teildarstellung aus der Fig. 10 zu entnehmen. Folglich wird durch das äußere Rohr 200 nur eine geringe Energiemenge aufgenommen. Fig. 11 zeigt nochmals eine schematische Querschnittsdarstellung durch einen Verriegelungsbolzen 250 mit einer daran befestigten Scheibe 920, die eine Bewegung des Bolzens 250 erleichtert oder erst technisch überhaupt möglich macht. Eine Feder 950 als Rückstellelement bewirkt, dass bei einer Fehlauslösung der Verriegelungsbolzen wieder in seine Ursprungslage zurückkehrt.

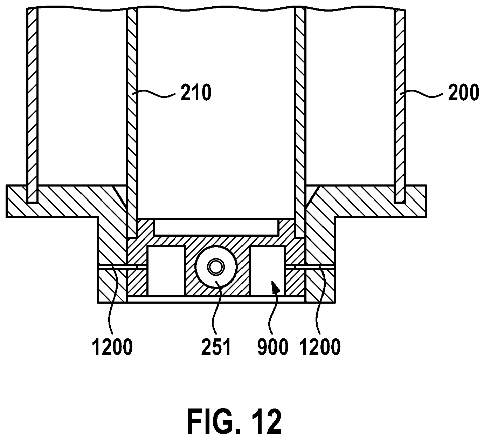

Der mit Bezug zu den Figuren 9 bis 11 beschriebene Verriegelungsmechanismus ist bei einer Fehlauslösung des Aktors 240 reversibel. Hierfür wird der Anschlag durch einen oder mehrere Stifte 1200 in Position gehalten, wie es in der Fig. 12 dargestellt ist. Fig. 12 zeigt dabei eine schematische Teilschnittansicht durch ein Ausführungsbeispiel der vorliegenden Erfindung. Ist der Verriegelungsbolzen 251 nach einer Aktuierung ausgelenkt, so kann sich der Bolzen 251 aufgrund der Federkraft der eingesetzten Federn wieder in die Ausgangsposition bewegen. Die Stifte 1200 nehmen nur die geringen Gewichts- und Betriebslasten des inneren Rohres 210 und des Anschlags 900 als Element auf. Bei einem Crash im entriegelten Zustand können sie leicht abgeschert werden.

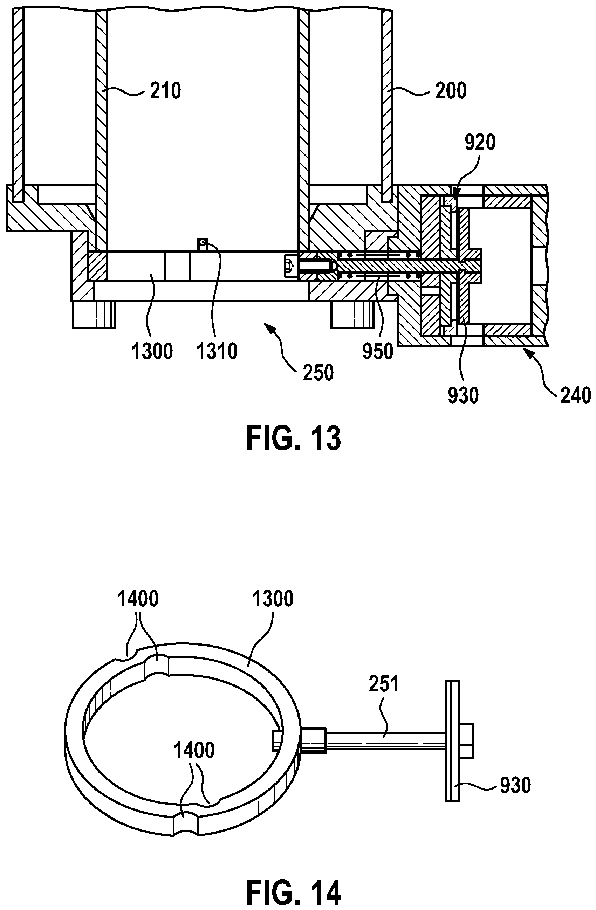

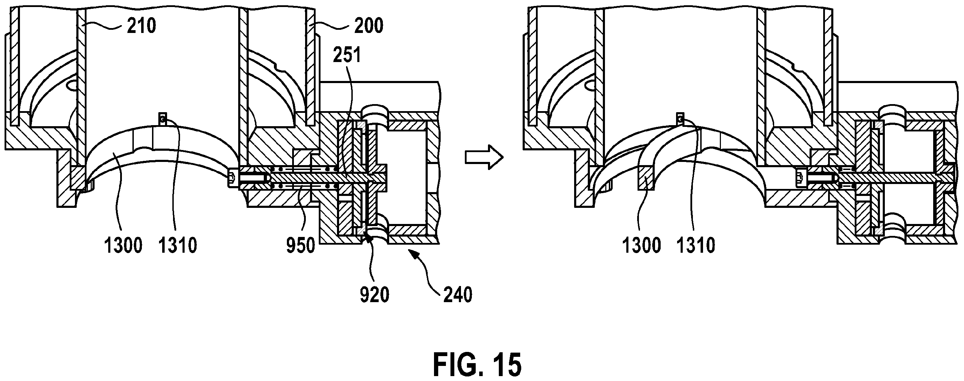

In einer zweiten vorgeschlagenen Variante eines Verriegelungsmechanismus mit der Aktureinheit 240 und dem Verriegelungsbolzen 250 wird der Verriegelungsbolzen 250 aus dem Ausführungsbeispiel entsprechend den Figuren 9 bis 12 durch einen (Verriegelungs-)Ring 1300 ersetzt, der durch den Aktor 240 verschoben wird. Mehrere schematische Querschnittdarstellungen durch ein solches Ausführungsbeispiel eines Aktor-Verriegelungseinheitssystem sind in den Figuren 13 bis 15 zu erkennen. Im inaktiven Zustand des Verriegelungsmechanismus ist das innere Rohr 210 nicht mehr vollständig durch den nun radial verschobenen Verriegelungsring 1300 unterstützt, wie es aus der perspektivischen Darstellung nach Fig. 13 ersichtlich ist. Bei einem Aufprall wird es durch den Ring 1300 mit nur einer geringen Energie in zwei Hälften zerschnitten. Durch die optionalen Aussparungen 1400 im Ring 1300 entsprechend der Darstellung aus Fig. 14 wird die Energieaufnahme durch den Ring 1400 möglichst gering gehalten. Als weitere Möglichkeit kann das (innere) Rohr 210 partiell in diesem Bereich schwächer ausgeführt sein, sodass die Zerschneidung möglichst einfach und mit geringer Energieaufnahme erfolgen kann. Für das reversible Verhalten des Verriegelungsmechanismus wird das innere Rohr 210 durch ein oder mehrere Stifte 1310 unterstützt. Bei einer Fehlauslösung kann sich der Ring wieder in seine Ausgangsposition zurückbewegen. Fig. 15 zeigt dabei in der linken Teildarstellung wieder eine entsprechende perspektivische Darstellung einer Lage von Komponenten der Energieabsorptionseinheit 130, in der der Verriegelungsmechanismus aktiv ist, d. h. in dem das innere Rohr 210 auf dem Verriegelungsring 1300 abgestützt ist, wogegen in der rechten Teildarstellung aus der Fig. 15 eine Lage von Komponenten der Energieabsorptionseinheit 130 bei einem inaktiven Verriegelungsmechanismus (d. h. einem ausgerückten Verriegelungsring 1300) dargestellt ist.

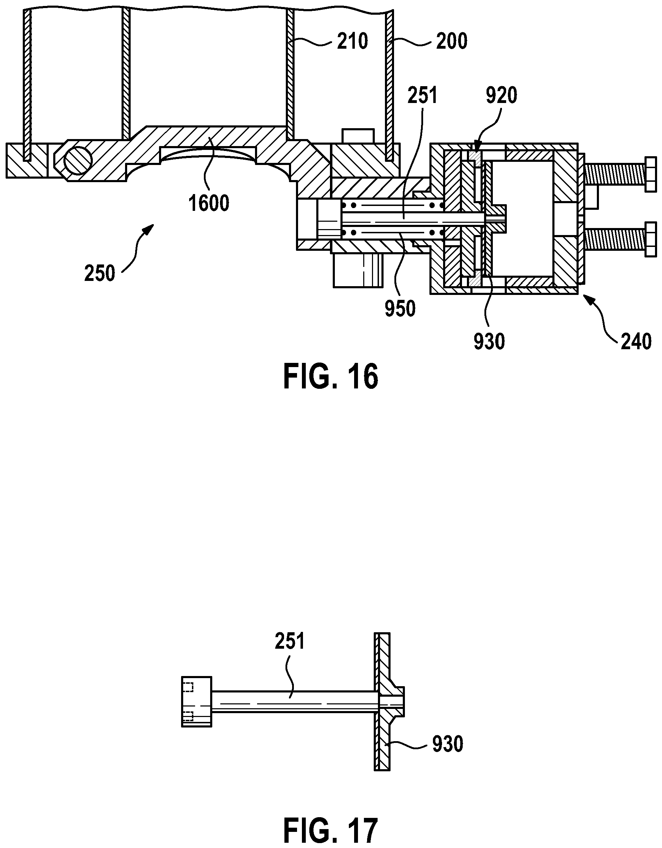

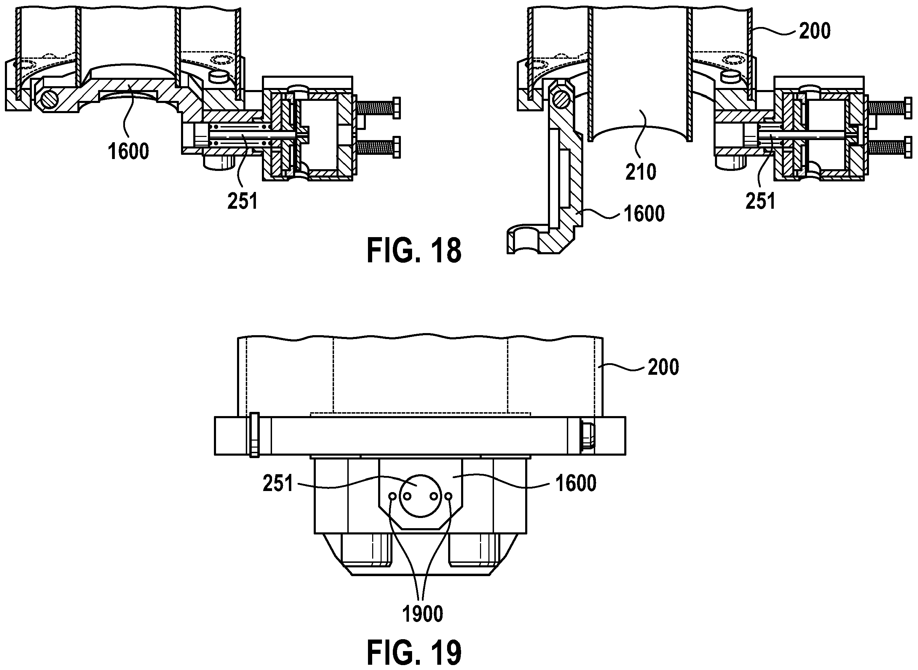

Gemäß einer weiteren Ausführungsform für eine Aktor-Verriegelungseinheit, die in den schematischen Teilschnittdarstellungen aus den Figuren 16 bis 19 wiedergegeben ist, kann eine Klappe 1600 verwendet werden. In der in diesen Figuren vorgeschlagenen Variante wird der Anschlag 900 aus Fig. 9 durch eine Klappe 1600 ersetzt, die durch einen Bolzen 251 verriegelt ist. Ein solches Ausführungsbeispiel ist in der Fig. 16 dargestellt. Die Klappe 1600 ist im inaktiven Zustand (wie er in der Fig. 18 in der rechten Teildarstellung wiedergegeben ist) aufgeschwenkt und das innere Rohr 210 wird nicht verformt bzw. zerstört. Dabei ist der Verriegelungsbolzen 251, der in der Fig. 17 in perspektivischer Darstellung mit der Scheibe 930 wiedergegeben ist, durch die Aktoreinheit 240 zurückgezogen und somit eine Bewegung des inneren Rohres nach unten freigegeben. Für das reversible Verhalten des Verriegelungsmechanismus wird die Klappe 1600 durch ein oder mehrere Stifte 1900 unterstützt, wie dies aus der seitlichen Ansicht gemäß der Fig. 19 ersichtlich ist. Bei einer Fehlauslösung kann sich der Bolzen 251 wieder in seine Ausgangsposition zurückbewegen und die Klappe 1600 verriegeln, sodass sie wieder in einen aktiven Zustand gebracht wird, der in der Fig. 18 in der linken Teildarstellung wiedergegeben ist.

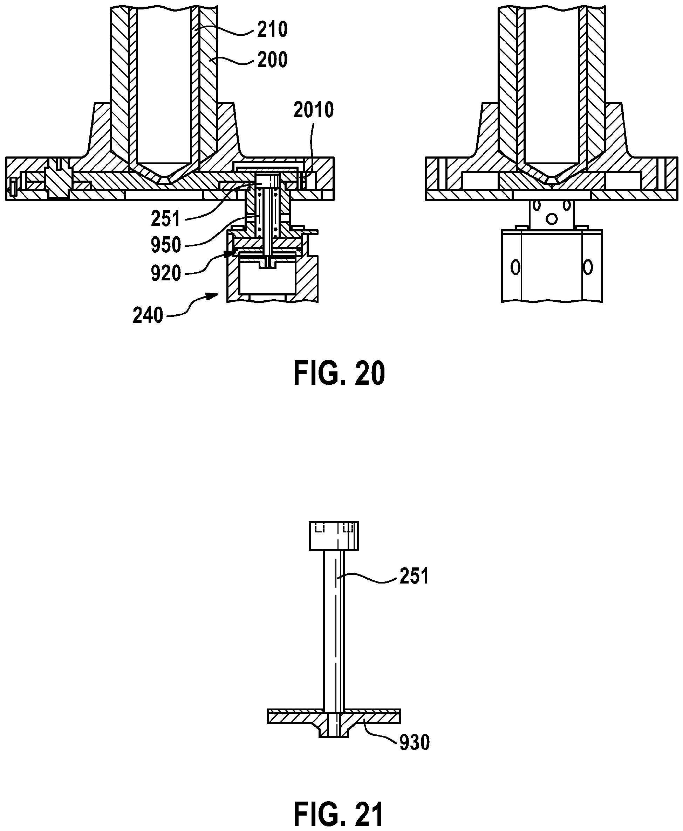

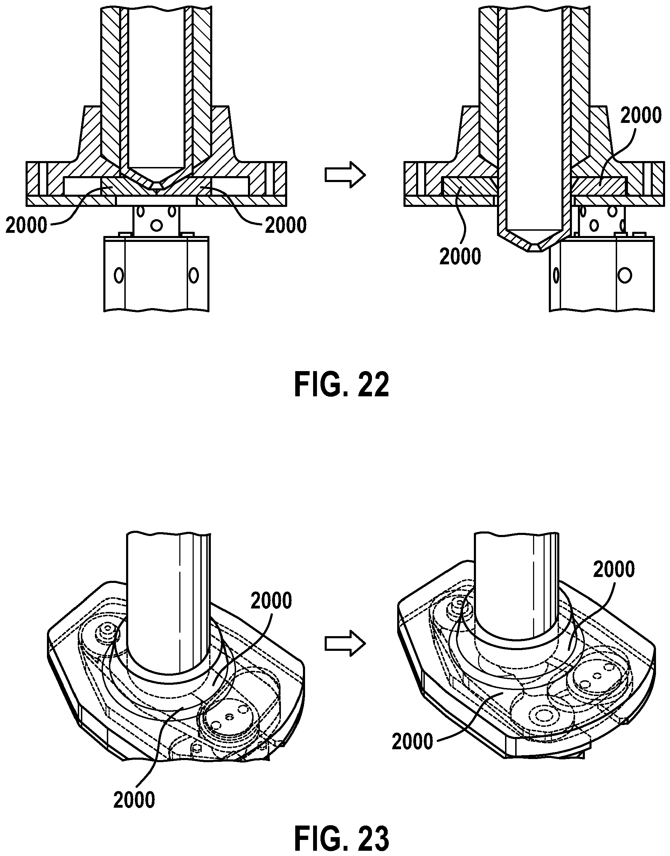

Gemäß einer weiteren Ausführungsform für eine Aktor-Verriegelungseinheit, die in den schematischen Teilschnittdarstellungen aus den Figuren 20 bis 23 wiedergegeben ist, kann eine Rohrschelle 2000 zum Freigeben und Sperren der Bewegung des inneren Rohres 210 verwendet werden. In der mit Bezug zu diesen Figuren vorgeschlagenen Variante wird der Anschlag 900 aus Fig. 9 durch Rohrschellen 2000 (d. h. eine zweiteilige Klammer) ersetzt, die durch einen Bolzen 251 verriegelt ist/sind. Ein solches Ausführungsbeispiel ist in den schematischen Teilquerschnittsdarstellungen aus den Figuren 20 bis 23 zu sehen. Die Rohrschelle 2000 wird ebenfalls wieder durch einen Verriegelungsbolzen 251 mit einer Scheibe bewegt, wie er in der Darstellung aus Fig. 21 zu erkennen ist. Im aktiven Zustand, der in der Fig. 22 in der linken Teildarstellung als perspektivische Ansicht abgebildet ist, sind die Rohrschellen 2000 verriegelt und äußere Rohr 200 und das innere Rohr 210 werden bei einem Crash zerstört oder deformiert. Im inaktiven Zustand, der in der Fig. 22 in der linken Teildarstellung als perspektivische Ansicht abgebildet ist, sind die Rohrschellen 2000 entriegelt (siehe die rechte Teildarstellung aus der Fig. 22) und es wird lediglich das äußere Rohr 200 deformiert bzw. zerstört. Fig. 23 zeigt eine perspektivische Darstellung der in Fig. 22 in den beiden Teildarstellungen widergegebenen Situation für den inaktiven oder aktiven Zustand des Verriegelungsmechanismus. Für das reversible Verhalten sind die Rohrschellen 2000 mit einem Stift 2010 gegeneinander fixiert, wie dies aus der Fig. 20 ersichtlich ist. Bei einer Fehlauslösung kann sich der Bolzen 251 wieder in seine Ausgangsposition zurückbewegen und die Rohrschellen 2000 verriegeln.

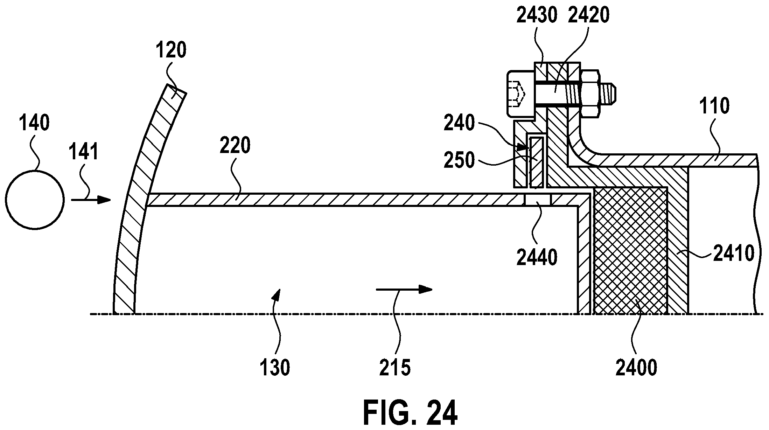

Fig. 24 zeigt eine schematische Querschnittsdarstellung eines weiteren Ausführungsbeispiels der vorliegenden Erfindung als Energieabsorptionseinheit 130. Dabei ist ein Absorberrohr 220 vorgesehen, das von der Energieabsorptionsfähigkeit dem dritten Absorberrohr entspricht (d. h. bei einer Krafteinwirkung von 100-200 kN deformiert wird), welches an dem Querträger 120 fixiert oder zumindest angebracht ist. Das Absorberrohr 220 ist an einem dem Querträger 120 gegenüberliegenden Ende zu einem (Energie-) Absorberelement 2400 benachbart angeordnet. Das Absorberelement 2400 kann beispielsweise als ein Schaummaterial ausgebildet sein und ähnliche oder gleiche Energieabsorptionseigenschaften wie das erste Absorberrohr 210 aufweisen (d. h. bei oder ab einer Krafteinwirkung von kleiner 10 kN verformt oder deformiert werden). Somit kann das Absorberrohr 220 zur Absorption von hohen Aufprallenergien ausgelegt sein, wogegen das Energieabsorptionselement 2400 zur Absorption von niedrigeren Aufprallenergien ausgelegt ist. Das Absorberrohr 220 ist in diesem Fall auf der an das Energieabsorptionselement 2400 angrenzende Ende geschlossen, und kann als Stempel zum Zusammendrücken des Energieabsorptionselementes 2400 wirken. Hierdurch kann das Energieabsorptionselement 2400 auf einer möglichst großen Fläche deformiert werden, sodass eine möglichst gute Ausnutzung der Energieabsorptionseigenschaften des Energieabsorptionselementes 2400 ausgenutzt werden kann.

Dieses Energieabsorptionselement 2400 ist ferner in einem Einsatzelement 2410 eingesetzt, welches ein Eindringen des Energieabsorptionselementes in den Längsträger 110 verhindert. Das Einsatzelement 2410 bildet somit eine Aufnahmeschale für das Energieabsorptionselement 2400 und ist an einem dem Querträger 120 zugewandten Ende des Längsträgers 110 mit diesem mittels einer Schraubverbindung 2420 befestigt. Zugleich kann die Schraubverbindung 2420 eine Klemmplatte 2430 fixieren, die ausgebildet ist, um den Aktor 240 und die Verriegelungseinheit 250 (d. h. das Aktor-Verriegelungssystem) in einer vorbestimmten Position zu fixieren. Das Verriegelungselement 250 kann bei einer Aktuierung (d. h. einer Sperrung der Relativbewegung des Absorberrohres 220 in Bezug zum Absorberelement 2400) eine Bewegung in der Fig. 24 nach unten in eine Öffnung 2440 oder Ausnehmung des Absorberrohres 210 ausführen. Soll eine Relativbewegung zwischen dem Absorberrohr 220 und dem Absorptionselement freigegeben werden, kann der Aktor 240 derart angesteuert werden, dass er das Verriegelungselement 250 in der Fig. 24 nach oben bewegt, um dieses aus der Öffnung 2440 (oder Ausnehmung) herauszubewegen und hierdurch die Relativbewegung freizugeben.

In der Fig. 24 sind somit Energieabsorptionselemente mit teilweisem Einbau im Längsträger gezeigt, wobei die Fig. 24 ein Schnittbild eines Ausführungsbeispiels der Erfindung im eingebauten Zustand im Fahrzeug dargestellt. Im rechten Teil ist die Längsträgerstruktur 110 eines Fahrzeuges abgebildet. Das hier vorgestellte Ausführungsbeispiel kann mittels einer Schraubverbindung 2420 an den Fahrzeuglängsträger 110 befestigt werden.

Um nun die Energieabsorptionseinheit 130 möglichst optimal nutzen zu können, sollte eine Anpassung deren Steifigkeit an die jeweilige Fahrtsituation des Fahrzeugs angepasst werden. Ist zur Aufprallenergieabsorption eine hohe Steifigkeit erforderlich, d. h. wird eine Crashart erkannt, die die Einstellung der Energieabsorptionseinheit auf ein hohes Kraftniveau erforderlich macht, ist eine besondere Schaltung des Verriegelungselementes 250 nötig. Das Absorberrohr 220 (d. h. das "Faltelement hohes Kraftniveau") ist mit einem Ende mit dem Querträger 120 verbunden und ist mit dem anderen im Einsatz 2410 eingepasst. Der Einsatz 2410 ist wiederum am Längsträger 110 des Fahrzeugs montiert. Um ein hohes aufzunehmendes Kraftniveau durch das Energieabsorptionselement zu realisieren, verriegelt der Aktuator 240, bzw. das Verriegelungselement 250 das Absorberrohr 220 (d. h. das "Faltelement hohes Kraftniveau") gegenüber dem Einsatz 2410 und somit dem Längsträger 110. Bei einem Crash wird folglich die Energie von dem Absorberrohr 220 ("Faltelement hohes Kraftniveau") aufgenommen. Das Energieabsorptionselement 2400 ("EA-Element niederes Kraftniveau") wird hierbei nicht deformiert.

Im Falle einer erforderlichen niedrigen Aufprallenergieaufnahmen, beispielsweise wenn ein Fußgänger auf das Fahrzeug aufprallt, wird eine Stellung des Energieabsorptionselementes 130 aktiviert, bei dem zwischen dem Absorberrohr 220 ("Faltelement hohes Kraftniveau") und dem Einsatz 2410 ein Energie absorbierendes Medium (z. B. ein Schaum o.ä) geschaltet ist. Um ein niederes Kraftniveau abzubilden, bleibt der Aktuator 240 bzw. das Verriegelungelement 250 geöffnet und das Absorberrohr 220 ("Faltelement hohes Kraftniveau") taucht in den Einsatz 2410 ein. Durch die geschlossene Fläche an der Unterseite des "Faltelements hohes Kraftniveau" wird das EA-Element deformiert. Das "Faltelement hohes Kraftniveau" wird in diesem Crashfall nicht beschädigt.

Als weitere Varianten bzw. Merkmale dieses Ausführungsbeispiels können verschiedene Komponenten der in der Fig. 24 dargestellten Energieabsorptionseinheit 130 modifiziert werden. Beispielsweise kann das Energieabsorptionselement 2400 in der Form eines deformierbaren Schaums, als faltbare Struktur oder als Kunststoffelement ausgeführt sein, das die Energie durch Zerstörung aufnimmt. Der Aktuator 240 und der Verriegelungsmechanismus 250 kann als ein oder mehrere Bolzen mit radialer Verschiebung bzw. Verschieblichkeit, ein oder mehrere radial verschiebliche Ringsegmente oder als Keilelemente ausgeführt sein.

Als "Sicherheitsreserve" für den Insassen steht nach dem Crash "niederes Kraftniveau" noch das "Faltelement hohes Kraftniveau " teilweise (Länge "Faltelement hohes Kraftniveau minus Länge "EA-Element") zur Verfügung. Dies wäre z. B. relevant, wenn nach einem Fußgängercrash noch ein zweiter Crash folgen würde. Der Vorteil der "Sicherheitsreserve" kommt auch im Fehlerfall zum Tragen, wenn der Aktor 240 oder die Sensorik 160, 165, 150 von einem Crash mit "niederem Kraftniveau" ausgeht, obwohl tatsächlich ein Crash mit "hohem Kraftniveau" erfolgt.

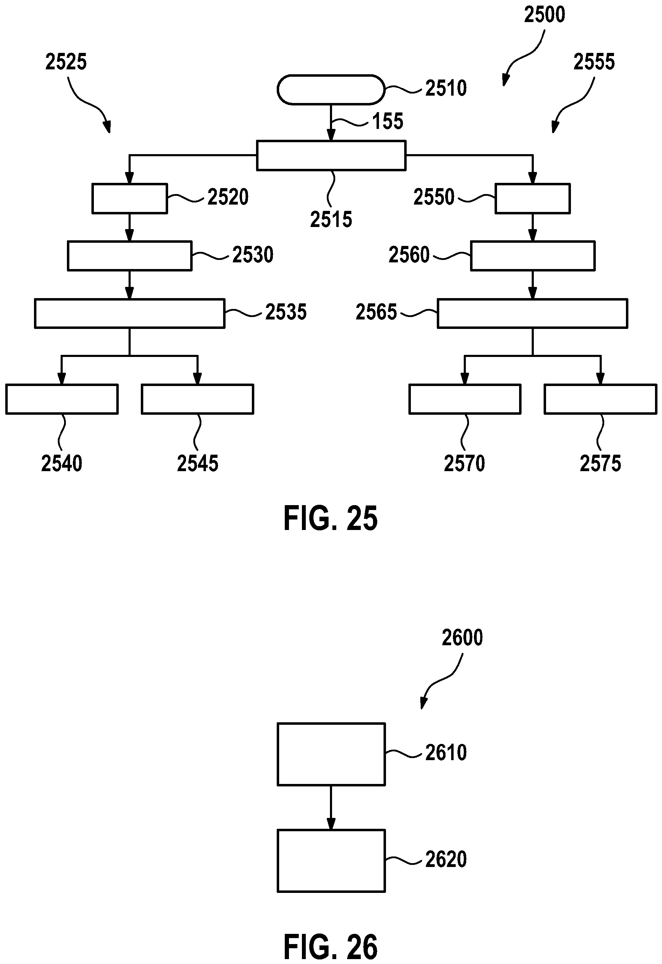

Fig. 25 zeigt ein Ablaufdiagramm eine Vorgehensweise 2500 für die Einstellung einer Steifigkeit der hier beschriebenen Energieabsorptionseinheit 130. Zunächst wird ein Crash- oder Sensorsignal 155 aus Fig. 1) in eine Steuer- oder Auswertungseinheit 150 eingelesen (Schritt 2510). Das eingelesene Signal 155 wird nun in der Auswertungseinheit 150 ausgewertet (Schritt 2515). Wird dabei erkannt, dass durch das aufprallende Objekt eine lediglich kleine Aufprallenergie zu absorbieren ist und somit die Steifigkeit der Energieabsorptionseinheit 130 zur Absorption einer kleinen Kraft gering einzustellen ist (Entscheidungsergebnis 2520), wird in einem ersten Entscheidungspfad 2525 gesprungen. Ansprechend auf dieses Entscheidungsergebnis 2520 wird der Aktuator geöffnet (Schritt 2530), d. h. der Verriegelungsbolzen 251 so gestellt, dass eine Relativbewegung des Absorberrohres zu einem weiteren Absorberrohr oder dem Absorptionselement freigegeben ist. Dadurch ist eine Verbindung zwischen beispielsweise einem Faltelement und einer Folgestruktur nicht hergestellt (Ergebnis 2535). Dies hat zur Folge, dass beispielsweise das Energieabsorptionselement 2400 deformiert wird (Ergebnis 2540), wogegen das Faltelement (beispielsweise das Element 220) beispielsweise in den Einsatz 2410 eintaucht und in dem Fall deformiert werden kann, wenn zu viel Aufprallenergie aufzunehmen ist, die durch eine Deformation des Energieabsorptionselements 2400 nicht mehr aufgenommen werden kann (Ergebnis 2545). Bei einer Ausgestaltung der Energieabsorptionseinheit 130 gemäß beispielsweise der Fig. 1 kann auch das erste Absorberrohr 200 deformiert werden, wogegen das zweite Absorberrohr erst dann deformiert werden kann, wenn ebenfalls die Aufprallenergie zu groß ist, als dass sie von dem ersten Absorberrohr 210 vollständig aufgenommen werden könnte.

Wird dagegen bei der Auswertung im Schritt 2515 erkannt, dass durch den Aufprall des Objekts auf das Fahrzeug eine sehr große Aufprallenergie aufzunehmen ist (Ergebnis 2550), kann das in einen zweiten Verarbeitungspfad 2555 gesprungen werden. In diesem Fall wird der Aktuator geschlossen (Schritt 2560), d. h., das Verriegelungselement 250 wird so positioniert, dass keine Relativbewegung zwischen dem Absorberrohr und dem zweiten Absorberrohr bzw. dem Energieabsorptionselement möglich wird. In diesem Fall ist eine Relativbewegung zwischen den Komponenten der Energieabsorptionseinheit 130 gesperrt, sodass eine (fixierte) Verbindung beispielsweise zwischen dem Faltelement und der oder den Folgestrukturen (in Bezug auf eine Kraftwirkungsrichtung) hergestellt ist (Zustand 2565). In diesem Fall wird das Energieabsorptionselement 2400 bzw. das erste Absorberrohr 200 (zunächst) nicht deformiert (Ergebnis 2570), wogegen das Faltelement 220 bzw. das zweite Absorberrohr 210 (als erstes) deformiert wird (Ergebnis 2575).

Fig. 26 zeigt ein weiteres Ablaufdiagramm eines Ausführungsbeispiels der vorliegenden Erfindung als Verfahren 2600 zum Absorbieren einer Aufprallenergie eines Objektes auf ein Fahrzeug. Das Verfahren 2600 wird unter Verwendung einer adaptiven Energieabsorptionseinheit gemäß einem der vorangegangenen Ausführungsbeispiele ausgeführt. Das Verfahren 2600 umfasst einen Schritt 2610 des Einlesens des Sensorsignals, das eine Aufprallenergie eines Objektes auf ein Fahrzeug repräsentiert und einen Schritt 2620 des Ausgebens eines unter Verwendung des Sensorsignals ermittelten Aktorsignals an eine Aktoreinheit, um eine Relativbewegung des ersten Absorberelements in Bezug zum zweiten Absorberelement freizugeben oder zu sperren.

Zusammenfassend ist anzumerken, dass in dem hier vorgestellten Ansatz eine Möglichkeit geschaffen wird, zwei Aufprallenergieabsorptionsniveaus bzw. Kraftniveaus technisch sehr einfach zu realisieren. Ein wichtiger Aspekt der vorliegenden Erfindung kann darin gesehen werden, dass mehrere Kraftniveaus (Energieabsorptionsniveaus) zur Energieabsorption in einem System dargestellt werden können, wobei die Kraftniveaus sehr weit auseinanderliegen und darüber hinaus das niedrigere Kraftniveau um einen großen Faktor (beispielsweise 10-50) kleiner ist als das höhere Niveau. Dies wird erreicht durch die Kombination verschiedener Energieabsorptionsmechanismen:
a) Das hohe Kraftniveau wird beispielsweise durch das Falten einer Struktur mit hohem Kraftniveau realisiert.
b) Das niedere Kraftniveau wird durch das Falten einer Struktur mit geringem Kraftniveau verwirklicht. (Alternativ hierzu könnte auch eine Struktur oder ein Schaum deformiert werden.)

Durch eine höhere Anzahl von Energieabsorptionselementen (EA-Elemente) sind auch mehr als 2 Kraftniveaus denkbar.

Die Energieabsorptionsmechanismen sind beispielsweise parallel angeordnet, sodass innerhalb der gleichen Baulänge beide Kraftniveaus realisiert werden können. Alternativ kann ein Energieabsorptionselement auch in den Längsträger eingebaut sein, wodurch sich die Fahrzeuglänge nicht vergrößert. In Abhängigkeit des Crashtyps werden die jeweiligen Strukturen aktiviert bzw. gegeneinander verriegelt.

Der Aktor stellt in Abhängigkeit des Crashtyps eine Verbindung zwischen den Strukturen zur Aufnahme der Crashenergie her oder löst diese. Hierdurch werden zwei unterschiedliche Kraftniveaus realisiert.

## Patentansprüche

1. Adaptive Energieabsorptionseinheit (130) zum Absorbieren einer Aufprallenergie eines Objektes auf ein Fahrzeug, wobei die Energieabsorptionseinheit (130) die zumindest folgenden Merkmale aufweist:
- ein erstes Absorberelement (200, 210; 2400), welches ausgebildet ist, um bei Absorption von einer in eine Wirkrichtung (215, 141) wirkenden Aufprallenergie einer ersten Aufprallenergiemenge zumindest teilweise verformt zu werden;
- ein zweites Absorberelement (220), das ausgebildet ist, um bei Absorption von einer in die Wirkrichtung (215, 141) wirkenden Aufprallenergie einer von der ersten Aufprallenergiemenge unterschiedlichen zweiten Aufprallenergiemenge zumindest teilweise verformt zu werden; wobei das erste und zweite Absorberelement bezogen auf die Wirkrichtung (215, 141) hintereinander angeordnet sind, wobei das zweite Absorberelement (220) ausgebildet ist, um durch die Aufprallenergie der zweiten Aufprallenergiemenge verformt zu werden, die von der ersten Aufprallenergiemenge unterschiedlich ist; und
- eine Aktoreinheit (240, 250), die ausgebildet ist, um ansprechend auf ein Aktorsignal eine Relativbewegung des ersten Absorberelementes (200, 210; 2400) in Bezug zum zweiten Absorberelement (220) freizugeben oder zu sperren.

2. Adaptive Energieabsorptionseinheit (130) gemäß Anspruch 1, **dadurch gekennzeichnet, dass** das erste Absorberelement (200, 210; 2400) ausgebildet ist, um bei einer Aufprallenergie verformt zu werden, die einer Kraft entspricht, die mindestens um einen Faktor von fünf, speziell mindestens um einen Faktor von zehn bis fünfzig kleiner ist, als eine Kraft, die einer Aufprallenergie entspricht, die zur Verformung des zweiten Absorberelements (220) erforderlich ist und/oder wobei sich ein Herstellungsmaterial des ersten Absorberelements (200, 210; 240) zumindest teilweise von einem Herstellungsmaterial des zweiten Absorberelements (220) unterscheidet und/oder wobei das erste Absorberelement (200, 210; 2400) ausgebildet ist, sich zumindest teilweise auf eine andere Weise zu verformen, als das zweite Absorberelement (220).

3. Adaptive Energieabsorptionseinheit (130) gemäß einem der vorangegangenen Ansprüche, **dadurch gekennzeichnet, dass** das erste (200, 210; 2400) und zweite Absorberelement (220) je als Absorberprofil ausgebildet ist, wobei das erste Absorberelement (200, 210; 2400) zumindest teilweise in das zweite Absorberelement (220) einführbar oder eingeführt ist.

4. Adaptive Energieabsorptionseinheit (130) gemäß Anspruch 3, **dadurch gekennzeichnet, dass** das erste Absorberelement (200, 210) ein erstes Teilprofil (200) und ein in dem ersten Teilprofil (200) angeordnetes zweites Teilprofil (210) aufweist, wobei eine für eine Deformation des zweiten Teilprofils (210) eine größere Deformationsenergie erforderlich ist, als für eine Deformation des ersten Teilprofils (200).

5. Adaptive Energieabsorptionseinheit (130) gemäß Anspruch 4, **dadurch gekennzeichnet, dass** das zweite Teilprofil (210) in das zweite Absorberelement (220) eingeführt oder einführbar ist.

6. Adaptive Energieabsorptionseinheit (130) gemäß einem der vorangegangenen Ansprüche, **dadurch gekennzeichnet, dass** das erste Absorberelement (2400) ausgebildet ist, um bei einer niedrigen Aufprallenergie verformt zu werden, wobei das erste Absorberelement (2400) in einem Einsatz (2410) angeordnet ist und wobei das zweite Absorberelement (220) ausgebildet ist, um bei Absorption einer höheren Aufprallenergie verformt zu werden, wobei das zweite Absorberelement (220) in Wirkrichtung (215, 141) vor dem ersten Absorberelement (2400) angeordnet ist.

7. Adaptive Energieabsorptionseinheit (130) gemäß einem der vorangegangenen Ansprüche, **dadurch gekennzeichnet, dass** die Aktoreinheit (240, 250) eine Verriegelungseinheit (250) aufweist, die ausgebildet ist, um in einem das erste Absorberelement (200, 210) freigebenden Zustand bei einer Relativbewegung des ersten Absorberelements (200, 210, 2400) gegenüber dem zweiten Absorberelement (220) zumindest teilweise zerstört zu werden.

8. Adaptive Energieabsorptionseinheit (130) gemäß Anspruch 7, **dadurch gekennzeichnet, dass** die Verriegelungseinheit (250) einen Scherstift und/oder einen Rand des ersten Absorberelements (210) zumindest teilweise abstützendes Ringelement (1300) aufweist.

9. Adaptive Energieabsorptionseinheit (130) gemäß Anspruch 8, **dadurch gekennzeichnet, dass** die Verriegelungseinheit (250) und/oder das erste Absorberelement (200, 210) zumindest eine Sollbruchstelle (1400) aufweist, an der die Verriegelungseinheit (250) und/oder das erste Absorberelement (200, 210) bei einer Relativbewegung zwischen dem ersten (200, 210) und zweiten (220) Absorberelement zumindest teilweise zerstört oder beschädigt wird.

10. Adaptive Energieabsorptionseinheit (130) gemäß einem der vorangegangenen Ansprüche, **dadurch gekennzeichnet, dass** die Aktoreinheit (240, 250) eine reversibel betätigbare Schließeinheit (1600) aufweist, die insbesondere als öffenbare Klappe oder als Rohrmanschette (2000) ausgebildet ist, um eine Relativbewegung des ersten Absorberelements (200, 210) in Bezug auf das zweite Absorberelement (220) freizugeben.

11. Adaptive Energieabsorptionseinheit (130) gemäß einem der vorangegangenen Ansprüche, **dadurch gekennzeichnet, dass** die Aktoreinheit (240, 250) zumindest eine Verriegelungseinheit (250) aufweist, die ausgebildet ist, um durch eine laterale Bewegung in Bezug auf eine Bewegungsrichtung (215, 141) des ersten Absorberelements (200, 210) die Relativbewegung zwischen dem ersten (200, 210) und zweiten (220) Absorberelement freizugeben.

12. Adaptive Energieabsorptionseinheit (130) gemäß einem der vorangegangenen Ansprüche, **dadurch gekennzeichnet, dass** die Aktoreinheit (240, 250) zumindest eine Rückstelleinheit (950) aufweist, die ausgebildet ist, um nach einer Freigabe oder einem Sperren der Relativbewegung des ersten Absorberelements (200, 210) in Bezug zum zweiten Absorberelement (220) die Aktoreinheit (240, 250) in einen Zustand zurückzusetzen, in dem sich die Aktoreinheit (240, 250) vor einem Auftreten des Aktorsignals befunden hat.

13. Adaptive Energieabsorptionseinheit (130) gemäß einem der vorangegangenen Ansprüche, **dadurch gekennzeichnet, dass** die Aktoreinheit (240, 250) eine Stelleinheit (930) aufweist, die ausgebildet ist, um unter Verwendung eines Wirbelstroms und/oder einer pyrotechnischen Treibladung ein Element (250) der Aktoreinheit (240, 250) zu verschieben, um die Relativbewegung des ersten Absorberelements (200, 210; 2400) in Bezug zum zweiten Absorberelement (220) freizugeben oder zu sperren.

14. Adaptive Energieabsorptionseinheit (130) gemäß einem der vorangegangenen Ansprüche, **gekennzeichnet, durch** eine Zugeinheit (440), die ausgebildet ist, um zumindest in einem Zustand, in dem eine Relativbewegung zwischen dem ersten (200, 210, 2400) und dem zweiten Absorberelement (220) **durch** die Aktoreinheit (240, 250) freigegeben ist, einen Bewegungsweg des ersten Absorberelements (200, 210, 2400) gegenüber dem zweiten Absorberelement (220) auf einen vordefinierten Maximalweg zu begrenzen, insbesondere wobei die Zugeinheit (440) ausgebildet ist, um ein Herausziehen des ersten Absorberelements (200, 210; 2400) aus dem zweiten Absorberelement (220) zu verhindern.

15. Adaptive Energieabsorptionseinheit (130) gemäß einem der vorangegangenen Ansprüche, **dadurch gekennzeichnet, dass** die Aktoreinheit (240, 250) ausgebildet ist, um das erste Absorberelement (200, 210; 2400) bei einer Relativbewegung zwischen dem ersten (200, 210; 2400) und zweiten Absorberelement (220) zu führen.

16. Adaptive Energieabsorptionseinheit (130) gemäß einem der vorangegangenen Ansprüche, **dadurch gekennzeichnet, dass** die Aktoreinheit (240, 250) ausgebildet ist, um das erste Absorberelement (200, 210; 2400) bei einer Relativbewegung zwischen dem ersten (200, 210; 2400) und zweiten Absorberelement (220) in eine Drehung (500) um eine in Wirkrichtung (215, 141) ausgerichtete Achse zu versetzen.

17. Verfahren (2600) zum Absorbieren einer Aufprallenergie eines Objektes auf ein Fahrzeug, wobei das Verfahren unter Verwendung einer adaptiven Energieabsorptionseinheit (130) gemäß einem der vorangegangenen Ansprüche ausgeführt wird, wobei das Verfahren (2600) zumindest die folgenden Schritte aufweist:
- Einlesen (2610) des Sensorsignals, das eine Aufprallenergie eines Objektes auf ein Fahrzeug repräsentiert; und
- Ausgeben (2620) eines unter Verwendung des Sensorsignals ermittelten Aktorsignals an eine Aktoreinheit, um eine Relativbewegung des ersten Absorberelements in Bezug zum zweiten Absorberelement freizugeben oder zu sperren.

18. Steuergerät (150), das Einheiten aufweist, die ausgebildet sind, um die Schritte eines Verfahrens (2500, 2600) gemäß Anspruch 17 durchzuführen und/oder anzusteuern.

19. Computer-Programmprodukt mit Programmcode zur Durchführung des Verfahrens (2600) gemäß Anspruch 17, wenn das Programmprodukt auf einer Vorrichtung oder einem Steuergerät (150) ausgeführt wird.

## Claims

1. Adaptive energy absorption unit (130) for absorbing impact energy of an object on a vehicle, wherein the energy absorption unit (130) has at least the following features:
- a first absorber element (200, 210; 2400) which is designed to be at least partially deformed upon absorption of impact energy, which acts in a direction of action (215, 141), of a first amount of impact energy;
- a second absorber element (220) which is designed to be at least partially deformed upon absorption of impact energy, which acts in the direction of action (215, 141), of a second amount of impact energy that differs from the first amount of impact energy; wherein the first and second absorber element are arranged one behind the other with respect to the direction of action (215, 141), wherein the second absorber element (220) is designed to be deformed by the impact energy of the second amount of impact energy that differs from the first amount of impact energy; and
- an actuator unit (240, 250) which is designed to release or to block a relative movement of the first absorber element (200, 210; 2400) with respect to the second absorber element (220) in response to an actuator signal.

2. Adaptive energy absorption unit (130) according to Claim 1, **characterized in that** the first absorber element (200, 210; 2400) is designed to be deformed in the event of impact energy which corresponds to a force which is smaller at least by a factor of five, especially at least by a factor of ten to fifty, than a force which corresponds to impact energy which is required for deforming the second absorber element (220), and/or wherein a production material of the first absorber element (200, 210; 240) at least partially differs from a production material of the second absorber element (220), and/or wherein the first absorber element (200, 210; 2400) is designed to at least partially deform in a different way than the second absorber element (220).

3. Adaptive energy absorption unit (130) according to either of the preceding claims, **characterized in that** the first absorber element (200, 210; 2400) and second absorber element (220) are each designed as an absorber profile, wherein the first absorber element (200, 210; 2400) is at least partially introducible or introduced into the second absorber element (220).

4. Adaptive energy absorption unit (130) according to Claim 3, **characterized in that** the first absorber element (200, 210) has a first partial profile (200) and a second partial profile (210) arranged in the first partial profile (200), wherein a greater deformation energy is required for deformation of the second partial profile (210) than for deformation of the first partial profile (200).

5. Adaptive energy absorption unit (130) according to Claim 4, **characterized in that** the second partial profile (210) is introduced or introducible into the second absorber element (220).

6. Adaptive energy absorption unit (130) according to one of the preceding claims, **characterized in that** the first absorber element (2400) is designed to be deformed in the event of low impact energy, wherein the first absorber element (2400) is arranged in an insert (2410), and wherein the second absorber element (220) is designed to be deformed upon absorption of higher impact energy, wherein the second absorber element (220) is arranged upstream of the first absorber element (2400) in the direction of action (215, 141).

7. Adaptive energy absorption unit (130) according to one of the preceding claims, **characterized in that** the actuator unit (240, 250) has a locking unit (250) which is designed in order, in a state releasing the first absorber element (200, 210), to be at least partially destroyed during a relative movement of the first absorber element (200, 210, 2400) in relation to the second absorber element (220).

8. Adaptive energy absorption unit (130) according to Claim 7, **characterized in that** the locking unit (250) has a ring element (1300) at least partially supporting a shearing pin and/or an edge of the first absorber element (210).

9. Adaptive energy absorption unit (130) according to Claim 8, **characterized in that** the locking unit (250) and/or the first absorber element (200, 210) has at least one predetermined breaking point (1400) at which the locking unit (250) and/or the first absorber element (200, 210) is at least partially destroyed or damaged during a relative movement between the first absorber element (200, 210) and second absorber element (220).

10. Adaptive energy absorption unit (130) according to one of the preceding claims, **characterized in that** the actuator unit (240, 250) has a reversibly actuable closing unit (1600) which is designed in particular as an openable flap or as a pipe collar (2000) in order to release a relative movement of the first absorber element (200, 210) with respect to the second absorber element (220).

11. Adaptive energy absorption unit (130) according to one of the preceding claims, **characterized in that** the actuator unit (240, 250) has at least one locking unit (250) which is designed in order, by means of a lateral movement with respect to a direction of movement (215, 141) of the first absorber element (200, 210), to release the relative movement between the first absorber element (200, 210) and second absorber element (220).

12. Adaptive energy absorption unit (130) according to one of the preceding claims, **characterized in that** the actuator unit (240, 250) has at least one resetting unit (950) which is designed in order, after a release or a blocking of the relative movement of the first absorber element (200, 210) with respect to the second absorber element (220), to set back the actuator unit (240, 250) into a state in which the actuator unit (240, 250) was in before the actuator signal occurred.

13. Adaptive energy absorption unit (130) according to one of the preceding claims, **characterized in that** the actuator unit (240, 250) has an adjustment unit (930) which is designed to displace an element (250) of the actuator unit (240, 250) using an Eddy current and/or a pyrotechnic propellant charge, in order to release or to block the relative movement of the first absorber element (200, 210; 2400) with respect to the second absorber element (220).

14. Adaptive energy absorption unit (130) according to one of the preceding claims, **characterized by** a traction unit (440) which is designed in order, at least in a state in which a relative movement between the first absorber element (200, 210, 2400) and the second absorber element (220) is released by the actuator unit (240, 250), to limit a movement distance of the first absorber element (200, 210, 2400) in relation to the second absorber element (220) to a predefined maximum distance, in particular wherein the traction unit (440) is designed to prevent the first absorber element (200, 210; 2400) from being pulled out of the second absorber element (220).

15. Adaptive energy absorption unit (130) according to one of the preceding claims, **characterized in that** the actuator unit (240, 250) is designed to guide the first absorber element (200, 210; 2400) during a relative movement between the first absorber element (200, 210; 2400) and second absorber element (220).

16. Adaptive energy absorption unit (130) according to one of the preceding claims, **characterized in that** the actuator unit (240, 250) is designed to set the first absorber element (200, 210; 2400) into a rotation (500) about an axis oriented in the direction of action (215, 141) during a relative movement between the first absorber element (200, 210; 2400) and second absorber element (220).

17. Method (2600) for absorbing impact energy of an object on a vehicle, wherein the method is carried out using an adaptive energy absorption unit (130) according to one of the preceding claims, wherein the method (2600) has at least the following steps:
- inputting (2610) the sensor signal which represents impact energy of an object on a vehicle; and
- outputting (2620) an actuator signal, which is determined using the sensor signal, to an actuator unit in order to release or to block a relative movement of a first absorber element with respect to the second absorber element.

18. Control device (150) which has units which are designed to carry out and/or activate the steps of a method (2500, 2600) according to Claim 17.

19. Computer program product with program code for carrying out the method (2600) according to Claim 17 when the program product is executed on a device or a control device (150).

## Revendications

1. Unité d'absorption d'énergie adaptative (130) pour l'absorption d'une énergie de choc d'un objet sur un véhicule, l'unité d'absorption d'énergie adaptative (130) présentant au moins les caractéristiques suivantes :
- un premier élément absorbeur (200, 210 ; 2400) qui est constitué pour être déformé au moins partiellement lors de l'absorption d'une énergie de choc, agissant dans une direction d'action (215, 141), d'une première quantité d'énergie de choc ;
- un deuxième élément absorbeur (220) qui est constitué pour être déformé au moins partiellement lors de l'absorption d'une énergie de choc, agissant dans la direction d'action (215, 141), d'une deuxième quantité d'énergie de choc différente de la première quantité d'énergie de choc ; le premier et le deuxième élément absorbeur étant, par rapport à la direction d'action (215, 141), disposés l'un derrière l'autre, le deuxième élément absorbeur (220) étant constitué pour être déformé par l'énergie de choc de la deuxième quantité d'énergie de choc qui est différente de la première quantité d'énergie de choc ; et
- une unité d'actionneur (240, 250) qui est constituée pour, en réaction à un signal d'actionneur, libérer ou bloquer un mouvement relatif du premier élément absorbeur (200, 210 ; 2400) par rapport au deuxième élément absorbeur (220).

2. Unité d'absorption d'énergie adaptative (130) selon la revendication 1, **caractérisée en ce que** le premier élément absorbeur (200, 210 ; 2400) est constitué pour être déformé lors d'une énergie de choc qui correspond à une force qui est inférieure d'au moins un facteur cinq, spécialement d'au moins un facteur de dix à cinquante, à une force qui correspond à une énergie de choc qui est nécessaire à la déformation du deuxième élément absorbeur (220), et/ou un matériau de fabrication du premier élément absorbeur (200, 210 ; 240) différant au moins partiellement d'un matériau de fabrication du deuxième élément absorbeur (220), et/ou le premier élément absorbeur (200, 210 ; 2400) étant constitué pour se déformer au moins partiellement d'une autre façon que le deuxième élément absorbeur (220).

3. Unité d'absorption d'énergie adaptative (130) selon l'une des revendications précédentes, **caractérisée en ce que** le premier élément absorbeur (200, 210 ; 2400) et le deuxième élément absorbeur (220) sont chacun constitués en tant que profilé absorbeur, le premier élément absorbeur (200, 210 ; 2400) pouvant être introduit ou étant introduit au moins partiellement dans le deuxième élément absorbeur (220).

4. Unité d'absorption d'énergie adaptative (130) selon la revendication 3, **caractérisée en ce que** le premier élément absorbeur (200, 210) présente un premier profilé partiel (200) et un deuxième profilé partiel (210) disposé dans le premier profilé partiel (200), une énergie de déformation plus grande étant nécessaire pour une déformation du deuxième profilé partiel (210) que pour une déformation du premier profilé partiel (200).

5. Unité d'absorption d'énergie adaptative (130) selon la revendication 4, **caractérisée en ce que** le deuxième profilé partiel (210) est introduit ou peut être introduit dans le deuxième élément absorbeur (220).

6. Unité d'absorption d'énergie adaptative (130) selon l'une des revendications précédentes, **caractérisée en ce que** le premier élément absorbeur (2400) est constitué pour être déformé lors d'une faible énergie de choc, le premier élément absorbeur (2400) étant disposé dans un insert (2410), et le deuxième élément absorbeur (220) étant constitué pour être déformé lors de l'absorption d'une énergie de choc plus élevée, le deuxième élément absorbeur (220) étant disposé avant le premier élément absorbeur (2400) dans la direction d'action (215, 141).

7. Unité d'absorption d'énergie adaptative (130) selon l'une des revendications précédentes, **caractérisée en ce que** l'unité d'actionneur (240, 250) présente une unité de verrouillage (250) qui est constituée pour être détruite au moins partiellement dans un état libérant le premier élément absorbeur (200, 210) lors d'un mouvement relatif du premier élément absorbeur (200, 210 ; 2400) par rapport au deuxième élément absorbeur (220).

8. Unité d'absorption d'énergie adaptative (130) selon la revendication 7, **caractérisée en ce que** l'unité de verrouillage (250) présente un élément annulaire (1300) supportant au moins partiellement une goupille de cisaillement et/ou un bord du premier élément absorbeur (210) .

9. Unité d'absorption d'énergie adaptative (130) selon la revendication 8, **caractérisée en ce que** l'unité de verrouillage (250) et/ou le premier élément absorbeur (200, 210) présente au moins un emplacement destiné à la rupture (1400) au niveau duquel l'unité de verrouillage (250) et/ou le premier élément absorbeur (200, 210) est au moins partiellement détruit ou endommagé lors d'un mouvement relatif entre le premier élément absorbeur (200, 210) et le deuxième élément absorbeur (220).

10. Unité d'absorption d'énergie adaptative (130) selon l'une des revendications précédentes, **caractérisée en ce que** l'unité d'actionneur (240, 250) présente une unité de fermeture (1600) pouvant être actionnée de façon réversible qui est constituée en particulier en tant que volet ouvrable ou en tant que manchette tubulaire (2000) pour libérer un mouvement relatif du premier élément absorbeur (200, 210) par rapport au deuxième élément absorbeur (220).

11. Unité d'absorption d'énergie adaptative (130) selon l'une des revendications précédentes, **caractérisée en ce que** l'unité d'actionneur (240, 250) présente au moins une unité de verrouillage (250) qui est constituée pour, par un mouvement latéral par rapport à une direction de mouvement (215, 141) du premier élément absorbeur (200, 210), libérer le mouvement relatif entre le premier élément absorbeur (200, 210) et le deuxième élément absorbeur (220).

12. Unité d'absorption d'énergie adaptative (130) selon l'une des revendications précédentes, **caractérisée en ce que** l'unité d'actionneur (240, 250) présente au moins une unité de rappel (950) qui est constituée pour, après une libération ou un blocage du mouvement relatif du premier élément absorbeur (200, 210) par rapport au deuxième élément absorbeur (220), remettre l'unité d'actionneur (240, 250) dans un état dans lequel l'unité d'actionneur (240, 250) s'est trouvée avant une survenue du signal d'actionneur.

13. Unité d'absorption d'énergie adaptative (130) selon l'une des revendications précédentes, **caractérisée en ce que** l'unité d'actionneur (240, 250) présente une unité de réglage (930) qui est constituée pour, en utilisant un courant de Foucault et/ou une charge propulsive pyrotechnique, déplacer un élément (250) de l'unité d'actionneur (240, 250) pour libérer ou bloquer le mouvement relatif du premier élément absorbeur (200, 210 ; 2400) par rapport au deuxième élément absorbeur (220).

14. Unité d'absorption d'énergie adaptative (130) selon l'une des revendications précédentes, **caractérisée par** une unité de traction (440) qui est constituée pour, au moins dans un état dans lequel un mouvement relatif entre le premier élément absorbeur (200, 210, 2400) et le deuxième élément absorbeur (220) est libéré par l'unité d'actionneur (240, 250), limiter à une course maximale prédéfinie une course de mouvement du premier élément absorbeur (200, 210, 2400) par rapport au deuxième élément absorbeur (220), l'unité de traction (440) étant en particulier constituée pour empêcher une extraction du premier élément absorbeur (200, 210 ; 2400) à partir du deuxième élément absorbeur (220).

15. Unité d'absorption d'énergie adaptative (130) selon l'une des revendications précédentes, **caractérisée en ce que** l'unité d'actionneur (240, 250) est constituée pour guider le premier élément absorbeur (200, 210 ; 2400) lors d'un mouvement relatif entre le premier élément absorbeur (200, 210 ; 2400) et le deuxième élément absorbeur (220).

16. Unité d'absorption d'énergie adaptative (130) selon l'une des revendications précédentes, **caractérisée en ce que** l'unité d'actionneur (240, 250) est constituée pour, lors d'un mouvement relatif entre le premier élément absorbeur (200, 210 ; 2400) et le deuxième élément absorbeur (220), amener le premier élément absorbeur (200, 210 ; 2400) à effectuer une rotation (500) autour d'un axe orienté dans la direction d'action (215, 141) .

17. Procédé (2600) destiné à l'absorption d'une énergie de choc d'un objet sur un véhicule, le procédé étant réalisé en utilisant une unité d'absorption d'énergie adaptative (130) selon l'une des revendications précédentes, le procédé (2600) présentant au moins les étapes suivantes :
- la lecture (2610) du signal de capteur qui représente une énergie de choc d'un objet sur un véhicule ; et
- la sortie (2620) vers une unité d'actionneur d'un signal d'actionneur déterminé en utilisant le signal de capteur pour libérer ou bloquer un mouvement relatif du premier élément absorbeur par rapport au deuxième élément absorbeur.

18. Appareil de commande (150), qui présente des unités qui sont constituées pour effectuer et/ou piloter les étapes d'un procédé (2500, 2600) selon la revendication 17.

19. Produit de programme informatique avec code de programme pour la réalisation du procédé (2600) selon la revendication 17 quand le produit de programme est exécuté sur un dispositif ou un appareil de commande (150) .
